# EUROPEAN PATENT APPLICATION

(11) **EP 4 797 661 A1**
(43) Date of publication of application: **26.08.2026**
(21) Application number: 24884843.4
(22) Date of filing: 30.10.2024
(51) Int. Cl.: H04L 67/60

(54) **COMMUNICATION METHOD AND RELATED APPARATUS**

(30) Priority: 31.10.2023 CN 202311440574
(71) Applicant: HUAWEI TECHNOLOGIES CO., LTD., Shenzhen 518129 (CN)
(72) Inventor: FENG, Zhao, Shenzhen, Guangdong 518129 (CN); ZHANG, Zhiqin, Shenzhen, Guangdong 518129 (CN); WANG, Yuan, Shenzhen, Guangdong 518129 (CN)
(74) Representative: Epping - Hermann - Fischer
(86) International application number: PCT/CN2024/128629
(87) International publication number: WO 2025/092843

(57) **Abstract**

A communication method and a related apparatus are provided. In the method, a network repository function network element receives a first request message from a first network element, where the first request message is for requesting a second network element, the first request message includes a network element capability type supported by the second network element, and the network element capability type supported by the second network element is one of a vertical federated server or a vertical federated client, or the network element capability type supported by the second network element is one of a vertical federated server, a master vertical federated client, or a slave vertical federated client; and sends a first response message to the first network element, where the first response message includes one or more second network elements, and the one or more second network elements support the network element capability type. According to this application, a participant of vertical federated learning can be discovered, thereby laying a foundation for subsequent vertical federated model training.

## Description

This application claims priority to China Patent Application No. 202311440574.6, filed with the China National Intellectual Property Administration on October 31, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Federated learning (federated learning, FL), as a distributed machine learning framework, can effectively resolve the problem of data silos and enable FL participants to perform joint modeling without sharing their data, thus facilitating artificial intelligence (artificial intelligence, AI) collaboration. In vertical federated learning (vertical federated learning, VFL), its main characteristic is that sample data sets of all participant parties have a high degree of overlap in sample space but a low degree of overlap in feature space. However, for VFL, how to discover a participant corresponding to VFL is an urgent problem to be resolved currently.

### SUMMARY

This application provides a communication method and a related apparatus, to discover a vertical federated learning participant, thereby laying a foundation for subsequent vertical federated model training.

According to a first aspect, this application provides a communication method. Optionally, the method may be performed by a network repository function network element supporting vertical federated learning, may be a component or an apparatus (for example, a processor, a chip, or a chip system) used in the network repository function network element, or may be a logical module or software that can implement all or a part of functions of the network repository function network element. The method includes:
receiving a first request message from a first network element, where the first request message is for requesting a second network element, and the first request message includes a network element capability type supported by the second network element, and further includes one or more of the following information: an identifier of a vertical federated learning group to which the second network element belongs and model type information supported by the second network element, where the network element capability type supported by the second network element is one of a vertical federated server or a vertical federated client, or the network element capability type supported by the second network element is one of a vertical federated server, a master vertical federated client, or a slave vertical federated client, and the model type information is for identifying a service type applicable to a model supported by the second network element and/or an algorithm type corresponding to the model; and
sending a first response message to the first network element, where the first response message includes one or more second network elements, and the one or more second network elements support the network element capability type.

In this application, in a vertical federated learning scenario, the network repository function network element is introduced to be responsible for discovering a cross-domain vertical federated learning participant, so that a service initiator (that is, the first network element) can discover a proper vertical federated learning service participant (that is, the second network element), thereby laying a foundation for subsequent vertical federated model training. It should be understood that the vertical federated learning service participant (referred to as a service participant for short below) herein may be a vertical federated server and a vertical federated client, or the service participant may be a vertical federated server, a master vertical federated client, and a slave vertical federated client.

In a possible design, the first request message further includes selection information of the second network element, where
when the network element capability type supported by the second network element is a vertical federated client, a master vertical federated client, or a slave vertical federated client, the selection information of the second network element includes one or more of the following: a time period in which the second network element supports vertical federated learning, data sample information supported by the second network element, data feature information supported by the second network element, or a training mode supported by the second network element; or
when the network element capability type supported by the second network element is a vertical federated server, the selection information of the second network element includes one or more of the following: a time period in which the second network element supports vertical federated learning, or a training mode supported by the second network element.

In this implementation, the selection information of the second network element included in the first request message may be understood as a requirement that the first network element expects the requested second network element to satisfy. This helps discover a proper service participant, and improves accuracy of discovery of the service participant.

In a possible design, when the first network element is a first vertical federated server, the network element capability type supported by the second network element is a vertical federated client, the network element capability type supported by the second network element is a slave vertical federated client, or the network element capability type supported by the second network element is a master vertical federated client;
when the first network element is a first master vertical federated client, the network element capability type supported by the second network element is a slave vertical federated client;
when the first network element is a first slave vertical federated client, the network element capability type supported by the second network element is a master vertical federated client; or
when the first network element is a first vertical federated client, a first master vertical federated client, or a first slave vertical federated client, the network element capability type supported by the second network element is a vertical federated server.

In this implementation, when the first network element is of a different network element type, the first network element requests to discover a different network element type of the second network element. In this way, the solutions of this application are more versatile, and more applicable to different scenarios, thereby increasing applicability.

In a possible design, the method further includes:
receiving a registration request message from a third network element, where the registration request message includes a network element capability type supported by the third network element, and further includes one or more of the following information: an identifier of a vertical federated learning group to which the third network element belongs, and model type information supported by the third network element; and
sending a registration response message to the third network element, where the registration response message indicates a registration result of the third network element.

In this implementation, a network element registration process in the vertical federated learning is provided. To be specific, before the foregoing network element discovery procedure is performed, each network element registers with the network repository function network element, so that the network repository function network element is subsequently responsible for discovering a cross-domain vertical federated learning participant.

In a possible design, when the network element capability type supported by the third network element is a master vertical federated client or a slave vertical federated client, the registration request message includes the model type information supported by the third network element.

In this implementation, when the vertical federated client is differentiated into a master vertical federated client or a slave vertical federated client, the master vertical federated client or the slave vertical federated client needs to notify the network repository function network element of the model type information supported by the master vertical federated client or the slave vertical federated client when performing registration. This helps the network repository function network element subsequently discover a master vertical federated client or a slave vertical federated client that satisfies specific model type information.

In a possible design, when the network element capability type supported by the third network element is a vertical federated client, a master vertical federated client, or a slave vertical federated client, the registration request message further includes one or more of the following information: a time period in which the third network element supports vertical federated learning, data sample information supported by the third network element, data feature information supported by the third network element, or a training mode supported by the third network element; or
when the network element capability type supported by the third network element is a vertical federated server, the registration request message further includes one or more of the following information: a time period in which the third network element supports vertical federated learning, or a training mode supported by the third network element.

In this implementation, the registration request message may further carry capability information of a network element that performs registration, for example, information such as a time period in which the vertical federated learning is supported or a supported training mode. This helps the network repository function network element subsequently discover a proper service participant, and improves accuracy of discovery of the service participant.

In a possible design, the third network element includes the first network element.

According to a second aspect, this application provides a communication method. Optionally, the method may be performed by a first vertical federated client supporting vertical federated learning, may be a component or an apparatus (for example, a processor, a chip, or a chip system) used in the first vertical federated client, or may be a logical module or software that can implement all or a part of functions of the first vertical federated client. The method includes:
sending a second request message to a fourth network element, where the second request message includes model type information, and the second request message is for requesting a vertical federated client that supports the model type information; and
receiving a second response message from the fourth network element, where the second response message includes one or more vertical federated clients that support the model type information, where
the fourth network element is a first vertical federated server or a network repository function network element.

In this application, in a vertical federated learning scenario, the first vertical federated client initiates, to the first vertical federated server or the network repository function network element, a request (that is, the second request message) for discovering a vertical federated client, to discover a vertical federated client that satisfies a specific model type information requirement.

In a possible design, before the sending the second request message to the fourth network element, the method further includes:
sending a third request message to the network repository function network element, where the third request message includes the model type information, and the third request message is for requesting a vertical federated server that supports the model type information; and
receiving a third response message from the network repository function network element, where the third response message includes one or more vertical federated servers.

In this implementation, in the vertical federated learning scenario, the first vertical federated client may further initiate, to the network repository function network element, a request for discovering a vertical federated server, to discover a vertical federated server that satisfies a specific model type information requirement.

In a possible design, when the fourth network element is a first vertical federated server, the second request message further indicates that a network element capability type supported by the first vertical federated client is a master vertical federated client or a slave vertical federated client.

In this implementation, the second request message may further indicate a network element that initiates the vertical federated learning, so that the network repository function network element receiving the second request message can learn of an initiator of the request message.

In a possible design, the second request message includes first indication information, and the first indication information indicates that the network element capability type supported by the first vertical federated client is a master vertical federated client or a slave vertical federated client.

In this implementation, specifically, indication information (for example, the first indication information) may be carried in the second request message, to indicate a request message initiator. Therefore, operability is high and applicability is high.

In a possible design, when the fourth network element is a network repository function network element, the method further includes:
sending a fourth request message to the one or more vertical federated clients, where the fourth request message is for requesting a vertical federated client to join the vertical federated learning; and
receiving a fourth response message from the one or more vertical federated clients, where the fourth response message indicates whether a vertical federated client agrees to join the vertical federated learning.

In this implementation, after the network repository function network element feeds back, to the first vertical federated client, one or more vertical federated clients that satisfy a requirement, the first vertical federated client may further query whether the vertical federated clients that satisfy the requirement agree to join the current vertical federated learning, and receive response messages fed back by the vertical federated client, to determine a vertical federated client that finally participates in the vertical federated learning, thereby further enhancing integrity of the solution.

In a possible design, the method further includes:
sending a fifth request message to a first vertical federated server, where the fifth request message includes a vertical federated client that agrees to join the vertical federated learning.

Because a federated learning model training process is usually initiated by a vertical federated server, in this implementation, after determining the vertical federated client that finally participates in the vertical federated learning, the first vertical federated client sends the fifth request message to the first vertical federated server, to notify the first vertical federated server of the vertical federated client that finally participates in the vertical federated learning. This facilitates the first vertical federated client in subsequently initiating model training for a specific model.

In a possible design, that the second request message is for requesting the vertical federated client that supports the model type information includes:
the second request message is for requesting a slave vertical federated client that supports the model type information;
the second request message is for requesting a master vertical federated client that supports the model type information; or
the second request message is for requesting a master vertical federated client and a slave vertical federated client that support the model type information.

In this implementation: ① When the first master vertical federated client initiates the vertical federated learning, and the first vertical federated server is responsible for coordination (including discovering other slave vertical federated clients, obtaining information about whether the other slave vertical federated clients can participate in the vertical federated learning, and the like), the second request message is a request message that is sent by the first master vertical federated client to the first vertical federated server and that is for requesting a slave vertical federated client that supports the model type information. ② When the first master vertical federated client initiates the vertical federated learning and the first master vertical federated client is responsible for coordination (that is, responsible for discovering and selecting a slave vertical federated client, and the like), the second request message is a request message that is sent by the first master vertical federated client to the network repository function network element and that is for requesting a slave vertical federated client that supports the model type information. ③ When the first slave vertical federated client initiates the vertical federated learning, and the first vertical federated server is responsible for coordination, the second request message is a request message that is sent by the first slave vertical federated client to the first vertical federated server and that is for requesting the master vertical federated client and the slave vertical federated client that support the model type information. ④ When the first slave vertical federated client initiates the vertical federated learning, and the first master vertical federated client is responsible for coordination (that is, responsible for discovering and selecting a vertical federated server and other slave vertical federated clients), in a first phase, the second request message is a request message that is sent by the first slave vertical federated client to the network repository function network element and that is for requesting a master vertical federated client supporting the model type information. Then, the first slave vertical federated client determines a master vertical federated client (for example, the first master vertical federated client) from a fed-back master vertical federated client, and the first slave vertical federated client sends a sixth request message to the first master vertical federated client to request a slave vertical federated client that supports the model type information, and may further request a vertical federated server. In a second phase, the second request message is a request message that is sent by the first master vertical federated client to the network repository function network element and that is for requesting a slave vertical federated client.

In a possible design, the fourth network element is a network repository function network element, the first vertical federated client is a first master vertical federated client, the second request message is for requesting a master vertical federated client that supports the model type information, the second response message includes one or more master vertical federated clients, and the first master vertical federated client is included in the one or more master vertical federated clients. The method further includes:
receiving a sixth request message from a first slave vertical federated client, where the sixth request message includes the model type information, and the sixth request message is for requesting a slave vertical federated client that supports the model type information.

In this implementation, if the first slave vertical federated client initiates the vertical federated learning, and the first master vertical federated client is responsible for coordination (that is, responsible for discovering and selecting a vertical federated server and other slave vertical federated clients), the first slave vertical federated client may send the sixth request message to the first master vertical federated client, where the sixth request message is for requesting a slave vertical federated client and a vertical federated server that support the model type information.

In a possible design, the method further includes:
sending a sixth response message to the first slave vertical federated client, where the sixth response message indicates whether a slave vertical federated client is successfully requested.

In a possible design, the fourth network element is a network repository function network element, the first vertical federated client is a first slave vertical federated client, the second request message is for requesting a master vertical federated client that supports the model type information, the second response message includes one or more master vertical federated clients, and a first master vertical federated client is included in the one or more master vertical federated clients; and
the method further includes:
sending a sixth request message to the first master vertical federated client, where the sixth request message includes the model type information, and the sixth request message is for requesting a slave vertical federated client that supports the model type information.

In this implementation, when the first slave vertical federated client initiates the vertical federated learning, and the first master vertical federated client is responsible for coordination (that is, responsible for discovering and selecting a vertical federated server and other slave vertical federated clients), the first slave vertical federated client may send, to the network repository function network element, the second request message that is for requesting a master vertical federated client supporting the model type information. Then, the first slave vertical federated client determines a master vertical federated client (for example, the first master vertical federated client) from a fed-back master vertical federated client, and the first slave vertical federated client sends a sixth request message to the first master vertical federated client to request a slave vertical federated client that supports the model type information and a vertical federated server. In this way, the first master vertical federated client may be triggered to subsequently discover a slave vertical federated client and a vertical federated server that satisfy a requirement.

In a possible design, the method further includes:
receiving a sixth response message sent by the first master vertical federated client, where the sixth response message indicates whether a slave vertical federated client is successfully requested.

In a possible design, the second request message further includes one or more of the following information: second indication information, an identifier of a vertical federated learning group, or selection information for the requested vertical federated client, where
the second indication information indicates that the requested network element capability type is a vertical federated client, and the selection information for the requested vertical federated client includes one or more of the following: a time period in which the vertical federated learning is supported, supported data sample information, supported data feature information, or a supported training mode.

In this implementation, the second request message may further specifically carry the foregoing described information such as the second indication information, the identifier of the vertical federated learning group, or the selection information for the requested vertical federated client, to assist in discovering a vertical federated client that satisfies a requirement. Applicability is high.

In a possible design, the third request message further includes one or more of the following information: an identifier of a vertical federated learning group, or a network element capability type requested by the third request message.

In this implementation, the third request message may further specifically carry the foregoing described information such as the identifier of the vertical federated learning group, or the network element capability type of the vertical federated server requested by the third request message, to assist in discovering the vertical federated server that satisfies a requirement. Applicability is high.

In a possible design, the fourth request message includes one or more of the following information:
third indication information, a time requirement for the vertical federated learning, a data sample requirement for the vertical federated learning, a data feature requirement for the vertical federated learning, or information about a master vertical federated client, where
the third indication information indicates a vertical federated client to join the vertical federated learning.

In this implementation, the fourth request message may further specifically carry the foregoing described information such as the third indication information, the time requirement for the vertical federated learning, the data sample requirement for the vertical federated learning, the data feature requirement for the vertical federated learning, or the information about the master vertical federated client, to assist in discovering a vertical federated client that finally agrees to join the vertical federated learning. Applicability is high.

In a possible design, the sixth request message further includes one or more of the following information:
fourth indication information, a network element capability type of the first slave vertical federated client initiating the sixth request message, or selection information for the requested slave vertical federated client, where
the fourth indication information is for requesting the slave vertical federated client.

In this implementation, the sixth request message may further specifically carry the foregoing described information such as the fourth indication information, the network element capability type of the first slave vertical federated client initiating the sixth request message, or the selection information for the requested vertical federated server and the requested slave vertical federated client, to assist in discovering a vertical federated server and a slave vertical federated client that satisfy a requirement. Applicability is high.

In a possible design, the first vertical federated client is a first master vertical federated client, and the second request message is for requesting a slave vertical federated client that supports the model type information. The method further includes:
receiving a seventh request message from the first vertical federated server, where the seventh request message includes one or more slave vertical federated clients that support the model type information.

In this implementation, the first master vertical federated client is notified by the seventh request message of information about all slave vertical federated clients that finally participate in the VFL, so that the first master vertical federated client can subsequently complete training of a specific model with the slave vertical federated clients.

In a possible design, the method further includes:
sending a registration request message to the network repository function network element, where the registration request message includes the network element capability type supported by the first vertical federated client, and further includes one or more of the following information: an identifier of a vertical federated learning group to which the first vertical federated client belongs, and model type information supported by the first vertical federated client; and
receiving a registration response message from the network repository function network element, where the registration response message indicates a registration result of the first vertical federated client.

In this implementation, a network element registration process in the vertical federated learning is provided. To be specific, before the foregoing network element discovery procedure is performed, each network element registers with the network repository function network element, so that the network repository function network element is subsequently responsible for discovering a cross-domain vertical federated learning participant.

In a possible design, when the network element capability type supported by the first vertical federated client is a master vertical federated client or a slave vertical federated client, the registration request message includes the model type information supported by the first vertical federated client.

In this implementation, when the vertical federated client is differentiated into a master vertical federated client or a slave vertical federated client, the master vertical federated client or the slave vertical federated client needs to notify the network repository function network element of the model type information supported by the master vertical federated client or the slave vertical federated client when performing registration. This helps the network repository function network element subsequently discover a master vertical federated client or a slave vertical federated client that satisfies specific model type information.

In a possible design, the registration request message further includes one or more of the following information: a time period in which the first vertical federated client supports the vertical federated learning, data sample information supported by the first vertical federated client, data feature information supported by the first vertical federated client, or a training mode supported by the first vertical federated client.

In this implementation, the registration request message may further carry capability information of a network element that performs registration, for example, information such as a time period in which the vertical federated learning is supported or a supported training mode. This helps the network repository function network element subsequently discover a proper service participant, and improves accuracy of discovery of the service participant.

According to a third aspect, this application provides a communication method. Optionally, the method may be performed by a first vertical federated server supporting vertical federated learning, may be a component or an apparatus (for example, a processor, a chip, or a chip system) used in the first vertical federated server, or may be a logical module or software that can implement all or a part of functions of the first vertical federated server. The method includes:
sending a first request message to a network repository function network element, where the first request message includes model type information, and the first request message is for requesting a vertical federated client that supports the model type information; and
receiving a first response message from the network repository function network element, where the first response message includes at least one vertical federated client that supports the model type information.

In this application, in a vertical federated learning scenario, the first vertical federated server initiates, to the network repository function network element, a request (that is, the first request message) for discovering a vertical federated client, to discover a vertical federated client that satisfies a specific model type information requirement.

In a possible design, the method further includes:
receiving a second request message from a first vertical federated client, where the second request message includes the model type information, and the second request message is for requesting the vertical federated client that supports the model type information; and
sending the first request message to the network repository function network element includes:
   sending the first request message to the network repository function network element based on the second request message.

In this implementation, when the first master vertical federated client initiates the vertical federated learning, and the first vertical federated server is responsible for coordination (including discovering other slave vertical federated clients, obtaining information about whether the other slave vertical federated clients can participate in the vertical federated learning, and the like), or when the first slave vertical federated client initiates the vertical federated learning, and the first vertical federated server is responsible for coordination, the first vertical federated server may be triggered based on the second request message sent by the first vertical federated client, to send the first request message to the network repository function network element.

In a possible design, the method further includes:
sending a second response message to the first vertical federated client, where the second response message includes one or more vertical federated clients that support the model type information.

In this implementation, the first vertical federated server may further send the second response message to the first vertical federated client, to enhance integrity of the solution.

In a possible design, the method further includes:
sending a fourth request message to the at least one vertical federated client, where the fourth request message is for requesting a vertical federated client to join the vertical federated learning; and
receiving a fourth response message from the at least one vertical federated client, where the fourth response message indicates whether a vertical federated client agrees to join the vertical federated learning; and
the sending the second response message to the first vertical federated client includes:
   sending the second response message to the first vertical federated client based on the fourth response message.

In this implementation, after the network repository function network element feeds back, to the first vertical federated server, one or more vertical federated servers that satisfy a requirement, the first vertical federated server may further query whether the vertical federated servers that satisfy the requirement agree to join the current vertical federated learning, and receive response messages fed back by the vertical federated server, to determine a vertical federated server that finally participates in the vertical federated learning, thereby further enhancing integrity of the solution.

In a possible design, the first vertical federated client is a first master vertical federated client, and the second request message is for requesting a slave vertical federated client that supports the model type information. The method further includes:
sending a seventh request message to the first master vertical federated client, where the seventh request message includes one or more slave vertical federated clients that support the model type information.

In a possible design, the second request message further indicates that a network element capability type of the first vertical federated client is a master vertical federated client or a slave vertical federated client.

In a possible design, the second request message includes first indication information, and the first indication information indicates that a network element capability type of the first vertical federated client is a master vertical federated client or a slave vertical federated client.

In a possible design, the second request message further includes one or more of the following information: second indication information, an identifier of a vertical federated learning group, or selection information for the requested vertical federated client, where
the second indication information indicates that the requested network element capability type is a vertical federated client, and the selection information for the requested vertical federated client includes one or more of the following: a time period in which the vertical federated learning is supported, supported data sample information, supported data feature information, or a supported training mode.

In a possible design, when the network element capability type of the first vertical federated client is a master vertical federated client, the second indication information included in the second request message indicates that the requested network element capability type is a slave vertical federated client, and fifth indication information included in the first request message indicates that the requested network element capability type is a slave vertical federated client.

In a possible design, the first request message further includes one or more of the following information: the identifier of the vertical federated learning group, or selection information for the requested slave vertical federated client.

In a possible design, when the network element capability type of the first vertical federated client is a slave vertical federated client, the second indication information included in the second request message indicates that the requested network element capability type is a master vertical federated client and a slave vertical federated client, and fifth indication information included in the first request message indicates that the requested network element capability type is a master vertical federated client and a slave vertical federated client.

In a possible design, the first request message further includes one or more of the following information: the identifier of the vertical federated learning group, selection information for the requested master vertical federated client, or selection information for the requested slave vertical federated client.

In this implementation, the first request message may further specifically carry the foregoing described information such as the identifier of the vertical federated learning group, the selection information for the requested master vertical federated client, or the selection information for the requested slave vertical federated client, to assist in discovering a master vertical federated client and a slave vertical federated client that satisfies a requirement. Applicability is high.

In a possible design, the method further includes:
sending a registration request message to the network repository function network element, where the registration request message includes a network element capability type supported by the first vertical federated server, and further includes one or more of the following information: an identifier of a vertical federated learning group to which the first vertical federated server belongs, and model type information supported by the first vertical federated server; and
receiving a registration response message from the network repository function network element, where the registration response message indicates a registration result of the first vertical federated server.

In a possible design, the registration request message further includes one or more of the following information: a time period in which the first vertical federated server supports the vertical federated learning, or a training mode supported by the first vertical federated server.

According to a fourth aspect, this application provides a communication apparatus. The communication apparatus may be a network repository function network element or a module or a chip in the network repository function network element. The communication apparatus includes:
a transceiver unit, configured to receive a first request message from a first network element, where the first request message is for requesting a second network element, and the first request message includes a network element capability type supported by the second network element, and further includes one or more of the following information: an identifier of a vertical federated learning group to which the second network element belongs and model type information supported by the second network element, where the network element capability type supported by the second network element is one of a vertical federated server or a vertical federated client, or the network element capability type supported by the second network element is one of a vertical federated server, a master vertical federated client, or a slave vertical federated client, and the model type information is for identifying a service type applicable to a model supported by the second network element and/or an algorithm type corresponding to the model.

The transceiver unit is configured to send a first response message to the first network element, where the first response message includes one or more second network elements, and the one or more second network elements support the network element capability type.

In a possible design, the first request message further includes selection information of the second network element, where
when the network element capability type supported by the second network element is a vertical federated client, a master vertical federated client, or a slave vertical federated client, the selection information of the second network element includes one or more of the following: a time period in which the second network element supports vertical federated learning, data sample information supported by the second network element, data feature information supported by the second network element, or a training mode supported by the second network element; or
when the network element capability type supported by the second network element is a vertical federated server, the selection information of the second network element includes one or more of the following: a time period in which the second network element supports vertical federated learning, or a training mode supported by the second network element.

In a possible design, when the first network element is a first vertical federated server, the network element capability type supported by the second network element is a vertical federated client, the network element capability type supported by the second network element is a slave vertical federated client, or the network element capability type supported by the second network element is a master vertical federated client;
when the first network element is a first master vertical federated client, the network element capability type supported by the second network element is a slave vertical federated client;
when the first network element is a first slave vertical federated client, the network element capability type supported by the second network element is a master vertical federated client; or
when the first network element is a first vertical federated client, a first master vertical federated client, or a first slave vertical federated client, the network element capability type supported by the second network element is a vertical federated server.

In a possible design, the transceiver unit is further configured to:
receive a registration request message from a third network element, where the registration request message includes a network element capability type supported by the third network element, and further includes one or more of the following information: an identifier of a vertical federated learning group to which the third network element belongs, and model type information supported by the third network element; and
send a registration response message to the third network element, where the registration response message indicates a registration result of the third network element.

In a possible design, when the network element capability type supported by the third network element is a master vertical federated client or a slave vertical federated client, the registration request message includes the model type information supported by the third network element.

In a possible design, when the network element capability type supported by the third network element is a vertical federated client, a master vertical federated client, or a slave vertical federated client, the registration request message further includes one or more of the following information: a time period in which the third network element supports vertical federated learning, data sample information supported by the third network element, data feature information supported by the third network element, or a training mode supported by the third network element; or
when the network element capability type supported by the third network element is a vertical federated server, the registration request message further includes one or more of the following information: a time period in which the third network element supports vertical federated learning, or a training mode supported by the third network element.

In a possible design, the third network element includes the first network element.

According to a fifth aspect, this application provides a communication apparatus. The communication apparatus may be a first vertical federated client or a module or a chip in the first vertical federated client. The communication apparatus includes:
a transceiver unit, configured to send a second request message to a fourth network element, where the second request message includes model type information, and the second request message is for requesting a vertical federated client that supports the model type information.

The transceiver unit is configured to receive a second response message from the fourth network element, where the second response message includes one or more vertical federated clients that support the model type information, where
the fourth network element is a first vertical federated server or a network repository function network element.

In a possible design, before the sending the second request message to the fourth network element, the transceiver unit is further configured to:
send a third request message to the network repository function network element, where the third request message includes the model type information, and the third request message is for requesting a vertical federated server that supports the model type information; and
receive a third response message from the network repository function network element, where the third response message includes one or more vertical federated servers.

In a possible design, when the fourth network element is a first vertical federated server, the second request message further indicates that a network element capability type supported by the first vertical federated client is a master vertical federated client or a slave vertical federated client.

In a possible design, the second request message includes first indication information, and the first indication information indicates that the network element capability type supported by the first vertical federated client is a master vertical federated client or a slave vertical federated client.

In a possible design, when the fourth network element is a network repository function network element, the transceiver unit is further configured to:
send a fourth request message to the one or more vertical federated clients, where the fourth request message is for requesting a vertical federated client to join the vertical federated learning; and
receive a fourth response message from the one or more vertical federated clients, where the fourth response message indicates whether a vertical federated client agrees to join the vertical federated learning.

In a possible design, the transceiver unit is further configured to:
send a fifth request message to a first vertical federated server, where the fifth request message includes a vertical federated client that agrees to join the vertical federated learning.

In a possible design, that the second request message is for requesting the vertical federated client that supports the model type information includes:
the second request message is for requesting a slave vertical federated client that supports the model type information;
the second request message is for requesting a master vertical federated client that supports the model type information; or
the second request message is for requesting a master vertical federated client and a slave vertical federated client that support the model type information.

In a possible design, the fourth network element is a network repository function network element, the first vertical federated client is a first master vertical federated client, the second request message is for requesting a master vertical federated client that supports the model type information, the second response message includes one or more master vertical federated clients, and the first master vertical federated client is included in the one or more master vertical federated clients. The transceiver unit is further configured to:
receive a sixth request message from a first slave vertical federated client, where the sixth request message includes the model type information, and the sixth request message is for requesting a slave vertical federated client that supports the model type information.

In a possible design, the transceiver unit is further configured to:
send a sixth response message to the first slave vertical federated client, where the sixth response message indicates whether a slave vertical federated client is successfully requested.

In a possible design, the fourth network element is a network repository function network element, the first vertical federated client is a first slave vertical federated client, the second request message is for requesting a master vertical federated client that supports the model type information, the second response message includes one or more master vertical federated clients, and a first master vertical federated client is included in the one or more master vertical federated clients.

The transceiver unit is further configured to:
send a sixth request message to the first master vertical federated client, where the sixth request message includes the model type information, and the sixth request message is for requesting a slave vertical federated client that supports the model type information.

In a possible design, the transceiver unit is further configured to:
receive a sixth response message sent by the first master vertical federated client, where the sixth response message indicates whether a slave vertical federated client is successfully requested.

In a possible design, the second request message further includes one or more of the following information: second indication information, an identifier of a vertical federated learning group, or selection information for the requested vertical federated client, where
the second indication information indicates that the requested network element capability type is a vertical federated client, and the selection information for the requested vertical federated client includes one or more of the following: a time period in which the vertical federated learning is supported, supported data sample information, supported data feature information, or a supported training mode.

In a possible design, the third request message further includes one or more of the following information: an identifier of a vertical federated learning group, or a network element capability type requested by the third request message.

In a possible design, the fourth request message includes one or more of the following information:
third indication information, a time requirement for the vertical federated learning, a data sample requirement for the vertical federated learning, a data feature requirement for the vertical federated learning, or information about a master vertical federated client, where
the third indication information indicates a vertical federated client to join the vertical federated learning.

In a possible design, the sixth request message further includes one or more of the following information:
fourth indication information, a network element capability type of the first slave vertical federated client initiating the sixth request message, or selection information for the requested slave vertical federated client, where
the fourth indication information is for requesting the slave vertical federated client.

In a possible design, the first vertical federated client is a first master vertical federated client, and the second request message is for requesting a slave vertical federated client that supports the model type information. The transceiver unit is further configured to:
receive a seventh request message from the first vertical federated server, where the seventh request message includes one or more slave vertical federated clients that support the model type information.

In a possible design, the transceiver unit is further configured to:
send a registration request message to the network repository function network element, where the registration request message includes the network element capability type supported by the first vertical federated client, and further includes one or more of the following information: an identifier of a vertical federated learning group to which the first vertical federated client belongs, and model type information supported by the first vertical federated client; and
receive a registration response message from the network repository function network element, where the registration response message indicates a registration result of the first vertical federated client.

In a possible design, when the network element capability type supported by the first vertical federated client is a master vertical federated client or a slave vertical federated client, the registration request message includes the model type information supported by the first vertical federated client.

In a possible design, the registration request message further includes one or more of the following information: a time period in which the first vertical federated client supports the vertical federated learning, data sample information supported by the first vertical federated client, data feature information supported by the first vertical federated client, or a training mode supported by the first vertical federated client.

According to a sixth aspect, this application provides a communication apparatus. The communication apparatus may be a first vertical federated server or a module or a chip in the first vertical federated server. The communication apparatus includes:
a transceiver unit, configured to send a first request message to a network repository function network element, where the first request message includes model type information, and the first request message is for requesting a vertical federated client that supports the model type information.

The transceiver unit is configured to receive a first response message from the network repository function network element, where the first response message includes at least one vertical federated client that supports the model type information.

In a possible design, the transceiver unit is further configured to:
receive a second request message from a first vertical federated client, where the second request message includes the model type information, and the second request message is for requesting the vertical federated client that supports the model type information.

When sending the first request message to the network repository function network element, the transceiver unit is specifically configured to:
send the first request message to the network repository function network element based on the second request message.

In a possible design, the transceiver unit is further configured to:
send a second response message to the first vertical federated client, where the second response message includes one or more vertical federated clients that support the model type information.

In a possible design, the transceiver unit is further configured to:
send a fourth request message to the at least one vertical federated client, where the fourth request message is for requesting a vertical federated client to join the vertical federated learning; and
receive a fourth response message from the at least one vertical federated client, where the fourth response message indicates whether a vertical federated client agrees to join the vertical federated learning.

When sending the second response message to the first vertical federated client, the transceiver unit is specifically configured to:
send the second response message to the first vertical federated client based on the fourth response message.

In a possible design, the first vertical federated client is a first master vertical federated client, and the second request message is for requesting a slave vertical federated client that supports the model type information. The method further includes:
sending a seventh request message to the first master vertical federated client, where the seventh request message includes one or more slave vertical federated clients that support the model type information.

In a possible design, the second request message further indicates that a network element capability type of the first vertical federated client is a master vertical federated client or a slave vertical federated client.

In a possible design, the second request message includes first indication information, and the first indication information indicates that a network element capability type of the first vertical federated client is a master vertical federated client or a slave vertical federated client.

In a possible design, the second request message further includes one or more of the following information: second indication information, an identifier of a vertical federated learning group, or selection information for the requested vertical federated client, where
the second indication information indicates that the requested network element capability type is a vertical federated client, and the selection information for the requested vertical federated client includes one or more of the following: a time period in which the vertical federated learning is supported, supported data sample information, supported data feature information, or a supported training mode.

In a possible design, when the network element capability type of the first vertical federated client is a master vertical federated client, the second indication information included in the second request message indicates that the requested network element capability type is a slave vertical federated client, and fifth indication information included in the first request message indicates that the requested network element capability type is a slave vertical federated client.

In a possible design, the first request message further includes one or more of the following information: the identifier of the vertical federated learning group, or selection information for the requested slave vertical federated client.

In a possible design, when the network element capability type of the first vertical federated client is a slave vertical federated client, the second indication information included in the second request message indicates that the requested network element capability type is a master vertical federated client and a slave vertical federated client, and fifth indication information included in the first request message indicates that the requested network element capability type is a master vertical federated client and a slave vertical federated client.

In a possible design, the first request message further includes one or more of the following information: the identifier of the vertical federated learning group, selection information for the requested master vertical federated client, or selection information for the requested slave vertical federated client.

In a possible design, the transceiver unit is further configured to:
send a registration request message to the network repository function network element, where the registration request message includes a network element capability type supported by the first vertical federated server, and further includes one or more of the following information: an identifier of a vertical federated learning group to which the first vertical federated server belongs, and model type information supported by the first vertical federated server; and
receive a registration response message from the network repository function network element, where the registration response message indicates a registration result of the first vertical federated server.

In a possible design, the registration request message further includes one or more of the following information: a time period in which the first vertical federated server supports the vertical federated learning, or a training mode supported by the first vertical federated server.

According to a seventh aspect, this application provides a communication apparatus. The communication apparatus includes a processor, and the processor is configured to execute a computer program, to enable the communication apparatus to perform the method according to any implementation of any one of the first aspect to the third aspect.

In a possible design, the communication apparatus may be a chip, or a device including the chip, implementing the method according to any implementation of any one of the first aspect to the third aspect.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. For example, the processor and the memory may also be integrated together.

According to an eighth aspect, this application provides a communication apparatus. The communication apparatus includes a processor, and the processor is configured to implement the method according to any implementation of any one of the first aspect to the third aspect by using a logic circuit or executing code instructions.

Optionally, the communication apparatus further includes an interface circuit. The interface circuit is configured to receive a signal from another communication apparatus other than the communication apparatus and transmit the signal to the processor, or send a signal from the processor to another communication apparatus other than the communication apparatus.

According to a ninth aspect, this application provides a computer-readable storage medium. The storage medium stores a computer program or instructions. When the computer program or the instructions are executed by a computer, the method according to any implementation of any one of the first aspect to the third aspect is implemented.

According to a tenth aspect, this application provides a computer program product. When a computer reads and executes the computer program product, the computer is enabled to perform the method according to any implementation of any one of the first aspect to the third aspect.

According to an eleventh aspect, this application provides a communication system. The communication system includes a communication apparatus configured to implement the method according to any implementation of the first aspect, a communication apparatus configured to implement the method according to any implementation of the second aspect, and a communication apparatus configured to implement the method according to any implementation of the third aspect.

For beneficial effects of the fourth aspect to the eleventh aspect, refer to the beneficial effects of the first aspect to the third aspect. Details are not described herein again.

### BRIEF DESCRIPTION OF DRAWINGS

FIG. 1 is a diagram of an architecture of a communication system;
FIG. 2 is a diagram of an architecture of another communication system;
FIG. 3 is a data distribution diagram of vertical federated learning;
FIG. 4 is a diagram of an interaction procedure of a communication method according to an embodiment of this application;
FIG. 5 is another diagram of an interaction procedure of a communication method according to an embodiment of this application;
FIG. 6 is another diagram of an interaction procedure of a communication method according to an embodiment of this application;
FIG. 7A and FIG. 7B are another diagram of an interaction procedure of a communication method according to an embodiment of this application;
FIG. 8 is a diagram of a possible structure of a communication apparatus according to an embodiment of this application; and
FIG. 9 is a diagram of a possible structure of a communication apparatus according to an embodiment of this application.

### DESCRIPTION OF EMBODIMENTS

The following further describes specific embodiments of this application in detail with reference to accompanying drawings.

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as new radio (new radio, NR), a system evolved after 5G such as a 6th generation (6th generation, 6G) system, and a wireless local area network (Wireless Local Area Network, WLAN). This is not limited herein.

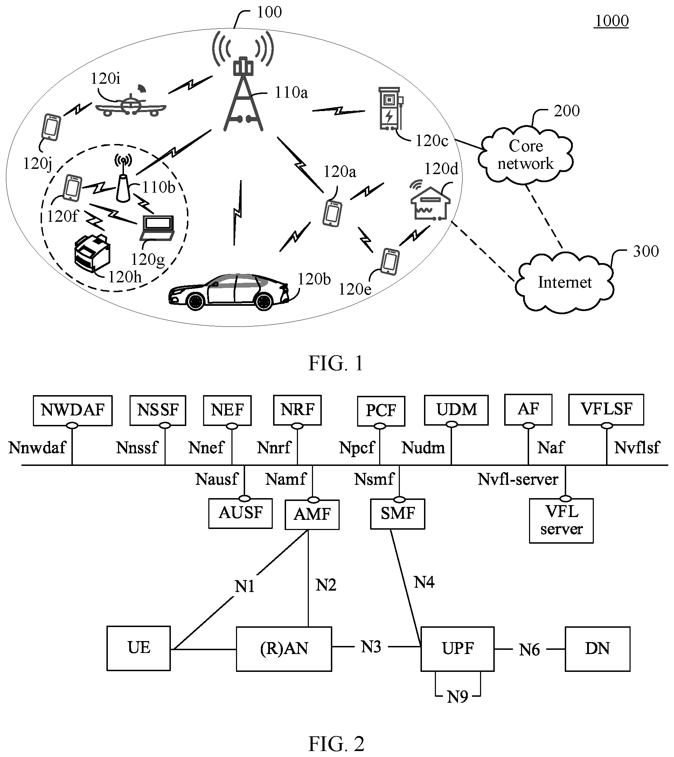

Refer to FIG. 1. FIG. 1 is a diagram of an architecture of a communication system. As shown in FIG. 1, a communication system 1000 includes a radio access network (radio access network, RAN) 100 and a core network (core network, CN) 200. For example, the communication system 1000 may further include the internet 300. The RAN 100 may include at least one RAN node/device (for example, 110a and 110b in FIG. 1, which are collectively denoted as 110) and at least one terminal (for example, 120a to 120j in FIG. 1, which are collectively denoted as 120). The RAN 100 may further include another RAN node, for example, a wireless relay device and/or a wireless backhaul device (not shown in FIG. 1). The terminal 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN, or ORAN), a cloud radio access network (cloud radio access network, CRAN), or the like. The RAN 100 may alternatively be a communication system that integrates two or more of the foregoing systems. It should be noted that a quantity of network devices and a quantity of terminal devices in FIG. 1 are merely examples, and should not be considered as specific limitations on this application.

The following separately describes in detail the terminal device, the RAN 100, and the CN 200 in the system architecture in FIG. 1.

### I. Terminal device

The terminal device includes a device that provides voice and/or data connectivity for a user. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The terminal device may be a mobile phone (mobile phone), a pad (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### II. RAN

The RAN may include one or more RAN devices/nodes (in other words, access network devices), and interfaces between the access network devices and the terminal devices may be Uu interfaces (or referred to as air interfaces). Certainly, in communication evolved after 5G, names of these interfaces may remain unchanged, or may be replaced with other names. This is not limited in this application.

The access network device is a node or a device that connects a terminal device to a wireless network. The access network device includes, for example, but is not limited to, a next generation NodeB (next generation NodeB, gNB), an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, a device that bears a base station function in device-to-device (Device-to-Device, D2D), vehicle-to-everything (vehicle-to-everything, V2X), and machine-to-machine (machine-to-machine, M2M) communication, and the like in a 5G communication system, and may further include a central unit (central unit, CU) and a distributed unit (distributed unit, DU) in a cloud radio access network (cloud radio access network, C-RAN) system, and a network device in a non-terrestrial communication network (non-terrestrial network, NTN) communication system, where in other words, the device may be deployed on a high-altitude platform, a satellite, or the like. This is not specifically limited in embodiments of this application.

### III. CN

The CN may include one or more network function entities (or referred to as core network elements, logical network elements, network elements, entities, or the like), for example, a network data analytics function (network data analytics function, NWDAF), a network slice selection function (network slice selection function, NSSF), a network exposure function (network exposure function, NEF), a network repository function (network function repository function, NRF), a policy control function (policy control function, PCF), a unified data management (unified data management, UDM), an application function (application function, AF), a vertical federated learning support function (vertical federated learning support function, VFLSF), an authentication server function (authentication server function, AUSF), an access and mobility management function (access and mobility management function, AMF), a session management function (session management function, SMF), a vertical federated learning (Vertical Federated Learning, VFL) server (server), and a user plane function (user plane function, UPF).

For example, refer to FIG. 2. FIG. 2 is another diagram of an architecture of a communication system. The communication system is a system architecture in a 5G non-roaming scenario. As shown in FIG. 2, the communication system includes the following logical network elements: an NWDAF, an NSSF, an NEF, an NRF, a PCF, a UDM, an AF, an AMF, a VFLSF, an AUSF, an SMF, UE, a (radio) access network ((radio) access network, (R)AN) device, a VFL server, a UPF, and a data network (data network, DN).
1. User plane network element: The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like.
In the 5G communication system, the user plane network element may be a UPF network element.
2. Authentication server: The authentication server performs security authentication on a user. In the 5G communication system, the authentication server may be an AUSF network element.
3. Mobility management network element: The mobility management network element is mainly for mobility management, access management, and the like. In the 5G communication system, the access management network element may be an AMF network element, and mainly performs functions such as mobility management and access authentication/authorization. In addition, the AMF network element is further responsible for transport for a user policy between the terminal and the PCF network element.
4. The session management network element is mainly used for session management, allocation and management of an internet protocol (internet protocol, IP) address of user equipment, selection and management of an endpoint of a user plane function interface and a policy control and charging function interface, downlink data notification, and the like.
In the 5G communication system, the session management network element may be an SMF network element, and completes assignment of an IP address of the terminal, UPF selection, charging and QoS policy control, and the like.
5. Application network element: In the 5G communication system, the application network element may be an AF network element, represents an application function of a third-party function entity or an operator, is an interface for obtaining external application data in a 5G network, and is mainly configured to transfer a requirement of an application side for a network side, for example, a QoS requirement or a user status event subscription requirement.
6. Unified data management network element: The unified data management network element is responsible for management of a user identifier, subscription data, and authentication data, and registration management of a serving network element of a user. In the 5G communication system, the unified data management network element may be a UDM network element.
7. Policy control network element: The policy control network element includes a user subscription data management function, a policy control function, a charging policy control function, quality of service (quality of service, QoS) control, and the like, is configured to: provide a unified policy framework for governing network behavior, provide policy rule information for a control plane function network element (for example, the AMF or SMF network element), and so on.
In the 5G communication system, the policy control network element may be a PCF.
8. Network function repository function network element: The network function repository function network element provides a storage function and a selection function of network functional entity information for another core network element. In the 5G communication system, the network element may be an NRF network element.
9. Network exposure network element: In the 5G communication system, the network exposure network element may be an NEF network element, is mainly configured to expose a service and a capability of a 3GPP network function to the AF, and may also enable the AF to provide information for the 3GPP network function.
10. Network slice selection function network element: The network slice selection function network element is responsible for selecting a network slice for the UE. In the 5G communication system, the application network element may be an NSSF network element.
11. Network data analytics function: The network data analytics function network element is mainly responsible for functions such as data collection, model training, data analytics, and model inference, and may be configured to: collect related data from a network element, a third-party service server, a terminal device, or a network management system, perform data analytics or model training based on the related data, and provide a data analytics result for the network element, the third-party service server, the terminal device, or the network management system, or provide a trained model for another data analytics function network element. In the 5G communication system, the network element may be an NWDAF. The NWDAF may be classified into an analytics logical function (AnLF) and a model training logical function (MTLF) based on functions. The AnLF is a logical function in the NWDAF, and is configured to perform model inference, derive an analytics result (that is, derive a statistical or predicted analytics result by analyzing consumer requests), and expose the analytics result. The MTLF is a logical function in the NWDAF, and is configured to train a model and expose a training service (for example, providing a trained model). An NWDAF may include only an AnLF, or may include only an MTLF, or may include both an AnLF and an MTLF. For example, Table 1 lists some analytics results that can be provided by the existing NWDAF, and data that needs to be collected when the NWDAF provides a corresponding analytics result. For example, the NWDAF may provide a service experience analytics result. To provide the analytics result, the NWDAF needs to collect service-related information such as a service identifier and service experience from the AF/UE, and collect information such as signal received power and signal received quality from the OAM. The NWDAF may train an AI model based on the collected data, and then obtain an inferred analytics result based on the AI model, for example, obtain predicted service experience in a future time period.

**Table 1: Analytics results provided by an NWDAF and examples of data to be collected**

| Example of analytics results of the NWDAF | Example of data to be collected |
|---|---|
| 1. Service experience analytics | AF/UE: service identifier, service experience, and other service-related information |
| | OAM (RAN): signal received power and signal received quality |
| 2. Network element load analytics | NRF: network element resource usage |
| | OAM: UE speed/direction (MDT data of the UE) Third-party application: path, destination, and arrival time |
| 3. Edge MEC service experience analytics | AF/UE: UE identifier, UE location, application identifier, application location, and uplink/downlink transmission performance data |

12. Vertical federated learning support function: The vertical federated learning support function is mainly responsible for registration and discovery of a VFL participant. In the 5G communication system, the network element may be a VFLSF. The VFLSF may be independently deployed, or may be deployed in a network element such as the NEF/NWDAF/AF.
13. Vertical federated learning server (VFL Server): The VFL server is responsible for maintaining a vertical federated learning process, authorizing admission and removal of federated learning members, and so on, and undertakes tasks such as distribution of encrypted keys and decryption of intermediate information. In the 5G communication system, the network element may be independently deployed, or may be deployed in a network element such as the NEF/NWDAF/AF.

Optionally, the VFLSF and the VLF server may not belong to the CN, but may be third-party function entities (for example, a network management network element or an AF). In this application, an example in which the VFLSF and the VLF server are CN network elements is mainly used for description.

The function network elements may be network elements in a hardware device, may be software functions running on dedicated hardware, or may be virtualization functions instantiated on a platform (for example, a cloud platform). One or more services may be obtained through division based on the foregoing function network element. Further, a service independent of a network function may exist. In this application, an instance of the function network element, an instance of the service included in the function network element, or an instance of the service independent of the network function may be referred to as a service instance.

In addition, although not shown, the CN may further include other possible network elements, such as a service communication proxy (service communication proxy, SCP), a network slice admission control function (network slice admission control function, NSACF) network element, a unified data repository (unified data repository, UDR) network element, and an authentication authorization and accounting (authentication authorization and accounting, AAA) network element.

It should be learned that, in the 5G communication system, the function network elements may have names of the function network elements shown in FIG. 2. In a communication system (for example, a 6G communication system) evolved after 5G, the function network elements may still have the names of the function network elements shown in FIG. 2, or may have other names. For example, in the 5G communication system, the policy control network element may be the PCF. In the communication system evolved after 5G (for example, the 6G communication system), the policy control function may still be the PCF, or may have another name. This is not limited in this application.

Nnssf is a service-oriented interface provided by the NSSF, Nnef is a service-oriented interface provided by the NEF, Nnrf is a service-oriented interface provided by the NRF, Npcf is a service-oriented interface provided by the PCF, Nudm is a service-oriented interface provided by the UDM, Naf is a service-oriented interface provided by the AF, Nausf is a service-oriented interface provided by the AUSF, Namf is a service-oriented interface provided by the AMF, Nsmf is a service-oriented interface provided by the SMF, N1 is a reference point between the UE and the AMF, N2 is a reference point between the (R)AN device and the AMF, N3 is a reference point between the (R)AN device and the UPF, N4 is a reference point between the SMF and the UPF, N6 is a reference point between the UPF and the DN, and N9 is a reference point between UPFs. It should be noted that, for meanings of Nnssf, Nnef, Nnrf, Npcf, Nudm, Naf, Nausf, Namf, Nsmf, N1, N2, N3, N4, N6, and N9 in FIG. 2, refer to meanings defined in a related standard protocol. This is not limited herein.

### IV. DN

The DN may also be referred to as a packet data network (packet data network, PDN), is a network located outside an operator network, and is mainly responsible for providing a data transmission service for a user, such as an IP multimedia service (IP multimedia service, IMS) or the internet (internet). The UE accesses the DN by establishing a session (session) among the UE, the RAN, the UPF, and the DN.

It should be noted that, in FIG. 2, the network functions and the entities may exchange messages through different interfaces. For example, the UE and the AMF entity may interact with each other through an N1 interface, where an exchanged message is referred to as an N1 message. Some interfaces are implemented as service-based interfaces. The UE, the RAN device, the UPF entity, and the DN in FIG. 2 may be referred to as network functions and entities on a data plane, and are configured to carry service data. User-layer data traffic may be transmitted by using a PDU session established between the UE and the DN, and passes through two network function entities: the RAN device and the UPF entity. Other network functions and entities may be collectively referred to as network functions and entities on a control plane, are configured to carry signaling messages, and are mainly responsible for functions such as authentication and authorization, registration management, session management, mobility management, and policy control, to ensure reliability and stability of user-layer data traffic transmission.

It should be noted that a name of a network element in this application may also be referred to as another name. This is not limited herein. It should be noted that a new network element or a newly designed network element described in this application may be an entirely new network element, may be an extension, update, addition, or the like of a function of an existing network element, or may be a combination, integration, or the like of functions of a plurality of existing network elements. This is not limited herein.

The following explains and describes related technical features in embodiments of this application. It should be noted that, these explanations are intended to make embodiments of this application easier to understand, but should not be construed as a limitation on the protection scope claimed in this application.

### 1. Federated learning (federated learning, FL)

The FL is a machine learning framework that can effectively help a plurality of organizations use data and perform machine learning modeling while satisfying requirements of user privacy protection, data security, and government regulations. The federated learning, as a distributed machine learning model, can effectively resolve a problem of data silos, and enable participants to perform joint modeling without sharing data, thereby technically breaking data silos and implementing AI collaboration. Based on different features of data sources of the participants, the federated learning may be classified into three types: horizontal federated learning, vertical federated learning, and federated transfer learning.

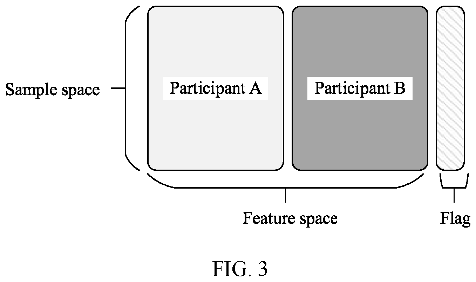

A main feature of the vertical federated learning is that a degree of overlap between sample spaces of data sets of all parties is very high, but a degree of overlap between feature spaces is low, as shown in FIG. 3. For example, a data sample set of a participant A includes data of (a user 1, a user 2, a user 3, and a user 4), where data of each user includes features (a feature 1, a feature 2, a feature 3, a feature 4, and a feature 5), and a data sample set of a participant B includes data of (the user 1, the user 2, the user 3, the user 4, and a user 5), where data of each user includes features (a feature 6, a feature 7, a feature 8, a feature 9, and a feature 10). It can be learned that an intersection set of data features of the participant A and the participant B is very small, but most data samples are the same. The participant A and the participant B may select same samples (that is, the user 1, the user 2, the user 3, and the user 4) from respective data sample sets to perform vertical federated learning model training.

It should be understood that this application mainly relates to vertical federated learning. Generally, participants of the vertical federated learning may be classified into a vertical federated client and a vertical federated server (VLF server). In other words, when the vertical federated client is not differentiated into a master/slave vertical federated client, the participants of the vertical federated learning mainly include two types of network elements: the vertical federated client and the vertical federated server. Each vertical federated client has some data features, but only one vertical federated client has a data label.

Optionally, the participants of the vertical federated learning may also be classified into the following three types: a master vertical federated client, a slave vertical federated client, and a vertical federated server. For a specific federated learning task, a participant that has some data features and data labels required by and corresponding to the task is referred to as a master vertical federated client, and the master vertical federated client may alternatively have only a data label but no data feature. For a specific federated learning task, a participant that has only some data features required by and corresponding to the task is referred to as a slave vertical federated client. The vertical federated server is mainly responsible for maintaining a vertical federated learning process, authorizing admission and removal of federated learning members, and so on, and undertakes tasks such as distribution of encrypted keys and decryption of intermediate information. The vertical federated server is usually a third party independent of tasks or credible organizations in the industry. In other words, when the vertical federated client is differentiated into a master/slave vertical federated client, the participants of the vertical federated learning mainly include three types of network elements: the master vertical federated client, the slave vertical federated client, and the vertical federated server.

### 2. Machine learning model interoperability indicator (ML Model Interoperability indicator)

The federated learning participant may configure a machine learning model interoperability indicator. The machine learning model interoperability indicator includes a vendor identifier (Vendor ID) list. The vendor identifier list is for identifying a vendor that can obtain a model from the federated learning participant, in other words, the federated learning participant supports providing a machine learning model for a vendor identified by the vendor identifier list.

### 3. Analytics identifier (Analytics ID)

The analytics ID indicates an identifier of a type of a trained model. Usually, a specific function of the trained model may be learned based on the analytics ID. For example, Analytics ID = service experience, indicating that the trained model is for service experience analytics.

### 4. Event identifier (Event ID)

The event ID is an event identifier, and is for identifying an event type supported by a network element, that is, a type of an event that another network element can subscribe to from the network element. When a network element receives a subscription message and the subscription message includes a specific event ID, the network element sends a notification to a subscriber when a corresponding event is triggered or a feedback condition specified by the subscriber is satisfied (for example, threshold feedback or periodic feedback). The notification includes specific data. For example, Event ID = "Number of UEs served by the AMF". After receiving the subscription, the AMF returns "Number of UEs served by the AMF" to the subscriber, indicating a total quantity of users served by the AMF. For another example, Event ID = "PDU Session Establishment and/or PDU Session Release". After receiving the subscription, an SMF feeds back "PDU Session established/released on a Network Slice" to the subscriber. In other words, the SMF reports information about a PDU session established/released on each slice.

### 5. Overlap degree of sample space

The sample space overlapping degree indicates a quantity of common samples owned by a plurality of vertical federated learning participants, or a proportion of a quantity of common samples owned by a plurality of vertical federated learning participants to a total quantity of samples owned by one of the vertical federated learning participants.

It should be understood that currently, for the VFL, no implementation solution is proposed for how to discover a participant corresponding to the VFL. Based on this, this application provides a communication method, to discover a vertical federated learning participant, laying a foundation for subsequent vertical federated model training.

It should be noted that in the following specific embodiments of this application, an example in which the network repository function network element is a VFLSF is mainly used for schematic description. The VFLSF may be a newly designed function network element (for example, the VFLSF may be a network element in a 5G core network), or the VFLSF may be a third-party function network element. Optionally, the VFLSF may also be combined with an existing network element. In other words, a function of the existing network element may be extended, so that the network element can implement a function of the VFLSF mentioned in this application. This is not limited in this application. The vertical federated server (namely, the VFL server) in this application may be a network element in a core network, or may be a third-party function network element. This is not limited in this application. In some implementations, the VFLSF and the vertical federated server may also be integrated. It should be understood that when the VFLSF and the vertical federated server are integrated, interaction between the VFLSF and the vertical federated server in the following specific embodiments may be understood as an implementation inside a device.

It should be noted that the vertical federated client in this application may be an AF, an NWDAF, or another network function (network function, NF), for example, an AMF or an SMF. This is not limited herein.

The following describes in detail a communication method and a communication apparatus provided in this application.

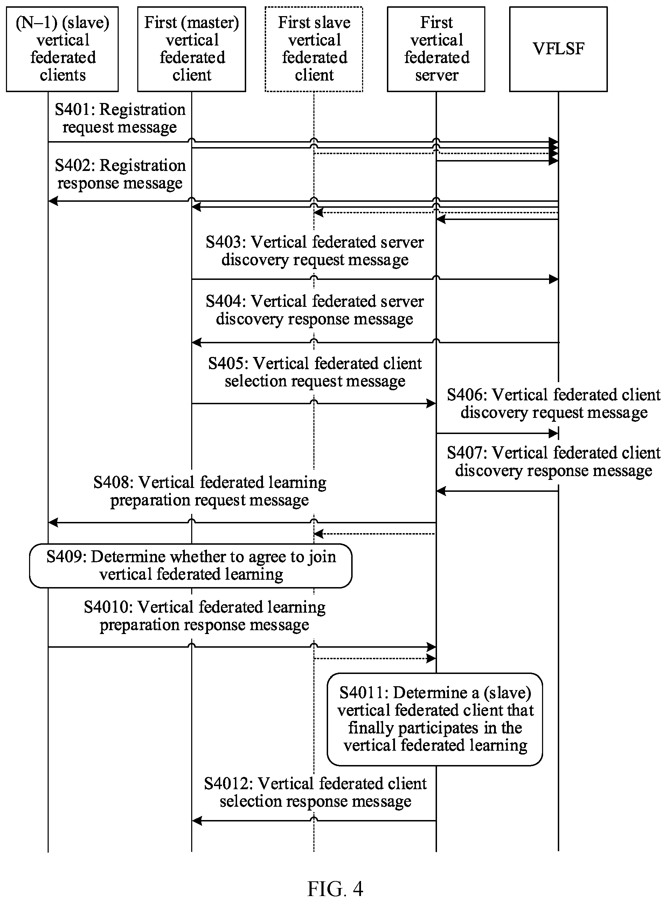

Refer to FIG. 4. FIG. 4 is a diagram of an interaction procedure of a communication method according to an embodiment of this application. As shown in FIG. 4, the communication method includes the following step S401 to S4012. The method shown in FIG. 4 may be performed by a vertical federated client, a vertical federated server, and a VFLSF, or the method shown in FIG. 4 may be performed by chips in a vertical federated client, a vertical federated server, and a VFLSF. For ease of description, FIG. 4 mainly uses the vertical federated client, the vertical federated server, and the VFLSF as an example for description. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in an order different from an order shown in FIG. 4, and possibly, not all operations in FIG. 4 need to be performed.

S401: A vertical federated client and a vertical federated server separately send a registration request message to a VFLSF. Correspondingly, the VFLSF receives the registration request message from the vertical federated client and the vertical federated server.

It should be noted that, when the vertical federated client is not differentiated into a master vertical federated client or a slave vertical federated client, the vertical federated client may include (N-1) vertical federated clients and a first vertical federated client (that is, the flowchart shown in FIG. 4 includes the (N-1) vertical federated clients and the first vertical federated client), where N is an integer greater than 1. When the vertical federated client is differentiated into a master vertical federated client or a slave vertical federated client, the vertical federated client may include a first master vertical federated client, a first slave vertical federated client, and (N-1) slave vertical federated clients (that is, the flowchart shown in FIG. 4 includes the (N-1) slave vertical federated clients, the first master vertical federated client, and the first slave vertical federated client), where N is an integer greater than 1.

Usually, a registration request message sent to the VFLSF by a network element that needs to be registered may include one or more of the following information: a network element capability type supported by the network element (or referred to as a type of a supported participant), an identifier (for example, a VFL group ID) of a vertical federated learning group to which the network element belongs, model type information (for example, Model Type ID(s) per VFL group ID) supported by the network element, model filter information (for example, ML model Filter information per Model Type ID(s)) corresponding to the model type information, model interoperability information (for example, ML Model Interoperability Information per Model Type ID(s)) corresponding to the model type information, address information (that is, Address of VFL client instance, for example, an internet protocol (internet protocol, IP) address) of the network element, a time period (for example, Time interval supporting VFL) in which the network element supports vertical federated learning, data sample information (or referred to as supported sample space, that is, Supported sample space) supported by the network element, data feature information (or referred to as supported feature space, that is, Supported feature space) supported by the network element, a training mode (that is, Supported training mode) supported by the network element, or the like.

In an example, when the vertical federated client is not differentiated into a master vertical federated client or a slave vertical federated client, a registration request message sent by any vertical federated client (for example, the following uses the first vertical federated client as an example for description) may include a network element capability type (for example, the network element capability type is a vertical federated client) supported by the first vertical federated client. Optionally, the registration request message may further include one or more of the following information: an identifier of a vertical federated learning group to which the first vertical federated client belongs, model type information supported by the first vertical federated client, model filter information corresponding to the model type information, model interoperability information corresponding to the model type information, address information of the first vertical federated client, a time period in which the first vertical federated client supports vertical federated learning, data sample information supported by the first vertical federated client, data feature information supported by the first vertical federated client, a training mode supported by the first vertical federated client, or the like.

In another example, when the vertical federated client is differentiated into a master vertical federated client or a slave vertical federated client, a registration request message sent by any master vertical federated client (for example, the following uses the first master vertical federated client as an example for description) may include model type information supported by the first master vertical federated client and a supported network element capability type (that is, the master vertical federated client). Optionally, the registration request message may further include one or more of the following information: a network element capability type (for example, the network element capability type is a master vertical federated client) supported by the first master vertical federated client, an identifier of a vertical federated learning group to which the first master vertical federated client belongs, model filter information corresponding to the model type information, model interoperability information corresponding to the model type information, address information of the first master vertical federated client, a time period in which the first master vertical federated client supports vertical federated learning, data sample information supported by the first master vertical federated client, data feature information supported by the first master vertical federated client, a training mode supported by the first master vertical federated client, or the like.

Similarly, in still another example, when the vertical federated client is differentiated into a master vertical federated client or a slave vertical federated client, a registration request message sent by any slave vertical federated client (for example, the following uses the first slave vertical federated client as an example for description) may include model type information supported by the first slave vertical federated client and a supported network element capability type (that is, the slave vertical federated client). Optionally, the registration request message may further include one or more of the following information: a network element capability type (for example, the network element capability type is a slave vertical federated client) supported by the first slave vertical federated client, an identifier of a vertical federated learning group to which the first slave vertical federated client belongs, model filter information corresponding to the model type information, model interoperability information corresponding to the model type information, address information (for example, an IP address) of the first slave vertical federated client, a time period in which the first slave vertical federated client supports vertical federated learning, data sample information supported by the first slave vertical federated client, data feature information supported by the first slave vertical federated client, a training mode supported by the first slave vertical federated client, or the like.

It can be learned from the foregoing examples that, when the vertical federated client is not differentiated into a master vertical federated client or a slave vertical federated client, a registration request message sent by any vertical federated client may include or may not include model type information supported by the vertical federated client; when the vertical federated client is differentiated into a master vertical federated client or a slave vertical federated client, a registration request message sent by any master/slave vertical federated client usually needs to include model type information supported by the master/slave vertical federated client.

In still another example, when the network element that needs to be registered is a vertical federated server, a registration request message sent by any vertical federated server (for example, the following uses a first vertical federated server as an example for description) may include a network element capability type (for example, the network element capability type is a vertical federated server) supported by the first vertical federated server. Optionally, the registration request message may further include one or more of the following information: an identifier of a vertical federated learning group to which the first vertical federated server belongs, model type information supported by the first vertical federated server, address information (for example, an IP address) of the first vertical federated server, a time period in which the first vertical federated server supports vertical federated learning, a training mode supported by the first vertical federated server, or the like.

It should be noted that the "identifier of the vertical federated learning group" in this embodiment of this application may be for marking a vertical federated learning group that can support joint training of a vertical federated model. In other words, participants with a same group identifier support joint training of a vertical federated model. Usually, one vertical federated learning group corresponds to one identifier. Optionally, in addition to indicating the vertical federated learning group, the identifier of the vertical federated learning group may further have a function of indicating a machine learning model interoperability indicator (ML model interoperability indicator). In this case, the identifier of the vertical federated learning group may be, for example, a vendor identifier list, and vendors in the list may obtain models from each other. For example, the vendor identifier list includes (a vendor ID 1, a vendor ID 2, and a vendor ID 3). If a vendor identifier of a vertical federated learning participant A is the vendor ID 1, and a vendor identifier of a vertical federated learning participant B is the vendor ID 2, it indicates that the vertical federated learning participant A may obtain a model from the vertical federated learning participant B, and the vertical federated learning participant B may also obtain a model from the vertical federated learning participant A. It should be understood that when the identifier of the vertical federated learning group does not have a function of the ML model interoperability indicator, the ML model interoperability indicator usually needs to be directly carried in the registration request message.

The "model type information" in this embodiment of this application may indicate a service type applicable to a vertical federated model of which training is supported by the vertical federated learning group and/or an algorithm type corresponding to the vertical federated model. The service type includes personalized recommendation of a telecom package, service experience analytics, network element load analytics, edge MEC service experience analytics, or the like. The algorithm type may include linear regression, a decision tree, a neural network model, or the like. One piece of model type information may indicate one or more service types and/or one or more algorithm types. This is not limited in this application.

For example, when the model type information indicates the service type applicable to the vertical federated model of which training is supported by the vertical federated learning group, a form of the model type information may be an analytics ID. Optionally, to protect privacy, the form of the model type information may also be a string of digits, a string of characters, or the like. The string of digits or the string of characters corresponds to the service type applicable to the vertical federated model. In other words, a specific function of the model cannot be learned based on the form of the model type information. In this way, the VFLSF or another third party can be prevented from directly learning, by using the model type information, the specific function of the model to be trained.

It should be noted that the "model filter information" in this embodiment of this application includes information such as single network slice selection assistance information (single network slice selection assistance information, S-NSSAI) or an area of interest (area of interest, AOI). The "model interoperability information" includes information such as a model file format (model file format) or a model execution environment (model execution environment). The "supported training mode" indicates algorithms/processes of specific modes that can be used to train the vertical federated model. For example, the supported training mode may be a vertical federated training method based on homomorphic encryption, a multi-party multi-class vertical federated method based on privacy protection label sharing, a multi-party vertical federated method based on secret sharing, or the like. This is not limited in this application.

The data sample information may be a group of UE identifiers or a group of encrypted UE identifiers. Herein, the encryption is to prevent the VFLSF or another third party from obtaining real sample space information. Usually, the data sample information may be for computing common sample space between different participants, to assist in discovering a vertical federated client with as many overlapping samples as possible. The data feature information mainly indicates a group of data features supported by a participant, and a specific form may be a group of event identifiers (Event ID). For understanding of the "Event ID", refer to the foregoing related part. Details are not described herein again.

S402: The VFLSF separately sends a registration response message to the vertical federated client and the vertical federated server. Correspondingly, the vertical federated client and the vertical federated server separately receive the registration response message from the VFLSF.

The registration response message herein indicates whether registration is successful. Specifically, the registration response message may include result indication (Result indication) information, to indicate whether the registration is successful.

S403: The first (master) vertical federated client sends a vertical federated server discovery request message to the VFLSF. Correspondingly, the VFLSF receives the vertical federated server discovery request message from the first (master) vertical federated client.

It should be noted that, when the vertical federated client is not differentiated into a master vertical federated client or a slave vertical federated client, the first vertical federated client sends the vertical federated server discovery request message to the VFLSF. When the vertical federated client is differentiated into a master vertical federated client or a slave vertical federated client, the first master vertical federated client sends the vertical federated server discovery request message to the VFLSF. For ease of description, the following provides a general description by using an example in which the first (master) vertical federated client sends the vertical federated server discovery request message to the VFLSF.

Usually, when the first (master) vertical federated client determines that a specific model needs to be trained in a vertical federated learning manner, the first (master) vertical federated client may send a vertical federated server discovery request message to the VFLSF (that is, a vertical federated learning initiator is the first (master) vertical federated client). For example, when finding that training data of a telecom package personalized recommendation model cannot be collected due to privacy protection, the first (master) vertical federated client may determine that the telecom package personalized recommendation model needs to be trained in the vertical federated learning manner, and the specific model is the telecom package personalized recommendation model. Therefore, the first (master) vertical federated client may send the vertical federated server discovery request message to the VFLSF.

In some feasible implementations, the vertical federated server discovery request message may include specific model type information. Therefore, the vertical federated server discovery request message is for requesting (discovering) a vertical federated server that supports the specific model type information. It should be understood that the specific model type information herein is information about a model that needs to be trained in a vertical federated learning manner, for example, a telecom package personalized recommendation model.

In some other feasible implementations, the vertical federated server discovery request message may not include specific model type information. Therefore, the vertical federated server discovery request message is for requesting (discovering) a vertical federated server.

It should be understood that there may be the following two implementations in which the vertical federated server discovery request message indicates a network element that is requested (discovered).

Implementation 1: Information about a network element capability type (that is, a vertical federated server) supported by a requested network element may be carried in the vertical federated server discovery request message, to indicate a type of network element that the vertical federated server discovery request message is for requesting (discovering). For example, the vertical federated server discovery request message includes a field (for example, the field may be described as VFL capability type), and the field is for carrying a network element capability type of a network element requested by the vertical federated server discovery request message. For example, VFL capability type = VFL server, indicating that the vertical federated server is requested.

Implementation 2: If a name of the vertical federated server discovery request message may indicate that the message is a request message for requesting the vertical federated server, the vertical federated server discovery request message may not carry information about a network element capability type (that is, the vertical federated server) supported by a requested network element. For example, the first (master) vertical federated client sends a request message to the VFLSF by using an Nvflsf_VFLServerDiscovery_Request service operation, and the VFLSF may learn, by using the service operation, that the first (master) vertical federated client needs to request (discover) the vertical federated server. For ease of understanding, this embodiment of this application is mainly described by using the first solution as an example.

Optionally, in addition to the foregoing described information, the vertical federated server discovery request message may further include information such as the identifier of the vertical federated learning group, a time period in which vertical federated learning is expected to be performed, and a supported training mode. This is not limited in this application.

S404: The VFLSF sends a vertical federated server discovery response message to the first (master) vertical federated client. Correspondingly, the first (master) vertical federated client receives the vertical federated server discovery response message from the VFLSF.

It should be noted that, when the vertical federated client is not differentiated into a master vertical federated client or a slave vertical federated client, the VFLSF sends the vertical federated server discovery response message to the first vertical federated client. When the vertical federated client is differentiated into a master vertical federated client or a slave vertical federated client, the VFLSF sends the vertical federated server discovery response message to the first master vertical federated client. For ease of description, the following provides a general description by using an example in which the VFLSF sends the vertical federated server discovery response message to the first (master) vertical federated client.

In some feasible implementations, when the vertical federated server discovery request message includes specific model type information, the VFLSF may determine (or referred to as discover), based on the received vertical federated server discovery request message, one or more vertical federated servers supporting the specific model type information, and send, to the first (master) vertical federated client, information about the one or more vertical federated servers that are discovered by the VFLSF and that support the specific model type information. Herein, the information about the one or more determined vertical federated servers that support the specific model type information may be carried in the vertical federated server discovery response message. Usually, the information about the vertical federated server may be an identifier (identifier, ID) of the vertical federated server, or the information about the vertical federated server may be an internet protocol (internet protocol, IP) address of the vertical federated server. When the fed-back information about the vertical federated server is an ID of the vertical federated server, the first (master) vertical federated client may generate, based on the ID of the vertical federated server, an IP address corresponding to the vertical federated server.

For example, it is assumed that the specific model type information is a telecom package personalized recommendation model. If the vertical federated server discovery request message includes the specific model type information, that is, the telecom package personalized recommendation model, the vertical federated server discovery response message fed back by the VFLSF may include information about vertical federated servers 1, 2, and 3 that support the telecom package personalized recommendation model.

In some other feasible implementations, when the vertical federated server discovery request message does not include specific model type information, the vertical federated server discovery response message fed back by the VFLSF includes information about one or more vertical federated servers supporting different model type information. Therefore, the first (master) vertical federated client further needs to interact with the one or more vertical federated servers included in the vertical federated server discovery response message, to determine a specific vertical federated server/specific vertical federated servers that supports/support the specific model type information.

For example, it is assumed that the specific model type information is a telecom package personalized recommendation model. If the vertical federated server discovery request message does not include the specific model type information, the vertical federated server discovery response message fed back by the VFLSF may include information about vertical federated servers 1, 2, and 3 that support the telecom package personalized recommendation model and information about vertical federated servers 4, 5, and 6 that support a service experience analytics model. Therefore, the first (master) vertical federated client further needs to separately interact with the vertical federated servers 1, 2, and 3 that support the telecom package personalized recommendation model, and with the vertical federated servers 4, 5, and 6 that support the service experience analytics model, to determine a specific vertical federated server/specific vertical federated servers that supports/support the telecom package personalized recommendation model.

For ease of understanding, an example in which the vertical federated server discovery request message includes the specific model type information, and the vertical federated server discovery response message includes the information about the one or more vertical federated servers that support the specific model type information is used below for description.

S405: The first (master) vertical federated client sends a vertical federated client selection request message to the first vertical federated server. Correspondingly, the first vertical federated server receives the vertical federated client selection request message from the first (master) vertical federated client.

It should be noted that, when the vertical federated client is not differentiated into a master vertical federated client or a slave vertical federated client, the first vertical federated client sends the vertical federated client selection request message to the first vertical federated server. When the vertical federated client is differentiated into a master vertical federated client or a slave vertical federated client, the first master vertical federated client sends the vertical federated client selection request message to the first vertical federated server. For ease of description, the following provides a general description by using an example in which the first (master) vertical federated client sends the vertical federated client selection request message to the first vertical federated server.

It should be understood that the first (master) vertical federated client may select one vertical federated server (for example, the first vertical federated server is used as an example for description) from the one or more vertical federated servers that support the specific model type information and that are fed back by the VFLSF, and send the vertical federated client selection request message to an IP address corresponding to the selected first vertical federated server.

In some feasible implementations, the vertical federated client selection request message may include the specific model type information. Therefore, the vertical federated client selection request message is for requesting a vertical federated client that supports the specific model type information. In some other feasible implementations, when one vertical federated server supports only one type of model type information, the vertical federated client selection request message may not include the specific model type information. Therefore, the vertical federated client selection request message is for requesting (discovering) a vertical federated client. It should be understood that, when the vertical federated client selection request message does not include the specific model type information, subsequently, the first vertical federated server further needs to interact with each vertical federated client fed back by the VFLSF, to determine a specific vertical federated client/specific vertical federated clients that supports/support the specific model type information. This is similar to the operation performed when the vertical federated server discovery request message in S403 and S404 does not include the specific model type information. Details are not described herein again. For ease of understanding, an example in which the vertical federated client selection request message may include the specific model type information is mainly used for illustration below.

It should be understood that there may be the following two implementations in which the vertical federated client selection request message indicates a network element that is requested (discovered).

Implementation 1: Information about a network element capability type (that is, a vertical federated client) of a requested network element may be carried in the vertical federated client selection request message, to indicate a type of network element that the vertical federated client selection request message is for requesting (discovering). For example, the vertical federated client selection request message includes a field (for example, the field may be described as VFL client selection Flag), and the field is for carrying a network element capability type (that is, second indication information) of a network element requested by the vertical federated client selection request message. For example, VFL client selection Flag = VFL client, indicating that a vertical federated client is requested. For another example, VFL client selection Flag = slave VFL client, indicating that a slave vertical federated client is requested. For another example, slave VFL client selection Flag = 1, indicating that a slave vertical federated client is requested.

Implementation 2: If a name of the vertical federated client selection request message may indicate that the message is a request message for requesting the vertical federated client, the vertical federated client selection request message may not carry information about a network element capability type of a requested network element. For example, the first (master) vertical federated client sends a vertical federated client selection request message to the first vertical federated server by using an Nvflserver_VFLClientSelection_Request service operation, and the first vertical federated server may learn, by using the service operation, that the first (master) vertical federated client needs to request (discover) a vertical federated client. For ease of understanding, this embodiment of this application is mainly described by using the first solution as an example.

Optionally, the vertical federated client selection request message in this application may further indicate a network element capability type of the first (master) vertical federated client, that is, indicate a network element capability type of an initiator of the vertical federated client selection request message, or indicate a network element capability type of the vertical federated learning initiator. Usually, when the vertical federated client is not differentiated into a master vertical federated client or a slave vertical federated client, the network element capability type of the first vertical federated client is a vertical federated client (that is, the network element capability type of the vertical federated learning initiator is a vertical federated client). When the vertical federated client is differentiated into a master vertical federated client or a slave vertical federated client, the network element capability type of the first master vertical federated client may be a master vertical federated client (that is, the network element capability type of the vertical federated learning initiator is a master vertical federated client). The following mainly describes two implementations in which the network element capability type of the vertical federated learning initiator is indicated.

Implementation 1: Information about the network element capability type of the first (master) vertical federated client may be carried in the vertical federated client selection request message, to indicate that the vertical federated learning initiator is a (master) vertical federated client. For example, the vertical federated client selection request message includes a field (for example, the field may be described as VFL client indicator), and the field is for carrying information (that is, first indication information) about the vertical federated learning initiator. For example, VFL client indicator = master VFL client, indicating that the vertical federated learning initiator is a master vertical federated client. For another example, the field may alternatively be master VFL client indicator. When master VFL client indicator = 1, it indicates that the vertical federated learning initiator is a master vertical federated client.

Implementation 2: If the name of the vertical federated client selection request message may indicate the vertical federated learning initiator, the vertical federated client selection request message may not carry the information about the vertical federated learning initiator. For example, the first (master) vertical federated client sends a vertical federated client selection request message to the first vertical federated server by using an Nvflserver_VFLClientSelection_Request service operation, and as defined, a requester of the Nvflserver_VFLClientSelection_Request service operation can only be a (master) vertical federated client. In this case, the first vertical federated server may learn, by using the service operation, that the vertical federated learning initiator is a (master) vertical federated client. For ease of understanding, this embodiment of this application is mainly described by using the first solution as an example.

It should be noted that: (1) When the vertical federated client is differentiated into a master vertical federated client or a slave vertical federated client, if VFL client selection Flag can only indicate that the requested network element capability type is a vertical federated client (that is, VFL client selection Flag = VFL client), but cannot specifically indicate that the requested network element capability type is a slave vertical federated client, the vertical federated client selection request message usually needs to carry VFL client indicator to indicate the vertical federated learning initiator (that is, VFL client indicator = master VFL client). In this way, a case in which the first vertical federated server cannot learn which network element needs to be discovered subsequently is avoided. In other words, the first vertical federated server may determine, based on VFL client selection Flag = VFL client and VFL client indicator = master VFL client, that the network element capability type that needs to be discovered as requested in subsequent step S406 is a slave vertical federated client. (2) When the vertical federated client is differentiated into a master vertical federated client or a slave vertical federated client, if VFL client selection Flag can specifically indicate that the requested network element capability type is a slave vertical federated client (that is, VFL client selection Flag = slave VFL client), the vertical federated client selection request message may carry VFL client indicator, or may not carry VFL client indicator. This is because the first vertical federated server can directly determine, based on VFL client selection Flag = slave VFL client, that the network element capability type that needs to be discovered as requested in subsequent step S406 is a slave vertical federated client. (3) When the vertical federated client is not differentiated into a master vertical federated client or a slave vertical federated client, the vertical federated client selection request message may include VFL client selection Flag (in this case, VFL client selection Flag = VFL client), but does not include VFL client indicator.

Optionally, in addition to the foregoing described information, the vertical federated client selection request message may further include information such as the identifier of the vertical federated learning group, or a requirement for the requested vertical federated client (or referred to as selection information for the requested vertical federated client). For example, the requirement/selection information for the requested vertical federated client includes one or more of the following: a time period in which a vertical federated client is expected to support the vertical federated learning, data sample information expected to be supported by the vertical federated client, data feature information expected to be supported by the vertical federated client, a training mode expected to be supported by the vertical federated client, or an overlap degree of sample space (that is, Overlap degree of sample space). The overlap degree of sample space may indicate to select a (slave) vertical federated client whose overlap degree of sample space is greater than a specific threshold or whose quantity of overlapping samples is greater than a specific threshold. In this way, sample alignment workload can be reduced.

S406: The first vertical federated server sends a vertical federated client discovery request message to the VFLSF. Correspondingly, the VFLSF receives the vertical federated client discovery request message from the first vertical federated server.

In some feasible implementations, the vertical federated client discovery request message may include the specific model type information. The vertical federated client discovery request message is for requesting a vertical federated client that supports the specific model type information.

It should be understood that, when the vertical federated client is not differentiated into a master vertical federated client or a slave vertical federated client, the vertical federated client discovery request message is for requesting a vertical federated client that supports the specific model type information. When the vertical federated client is differentiated into a master vertical federated client or a slave vertical federated client, the vertical federated client discovery request message is for requesting a slave vertical federated client that supports the specific model type information.

It should be understood that there may be the following two implementations in which the vertical federated client discovery request message indicates a network element that is requested (discovered).

Implementation 1: Information (that is, fifth indication information) about a network element capability type (that is, a vertical federated client/slave vertical federated client) of a requested network element may be carried in the vertical federated client discovery request message, to indicate a network element that the vertical federated client discovery request message is for requesting (discovering). For example, the vertical federated client discovery request message includes a field (for example, the field may be described as VFL capability type), and the field is for carrying a network element capability type of a network element requested by the vertical federated client discovery request message. For example, VFL capability type = VFL client/ slave VFL client, indicating that the vertical federated client/slave vertical federated client is requested.

Implementation 2: If a name of the vertical federated client discovery request message may indicate that the message is a request message for requesting the vertical federated client/slave vertical federated client, the vertical federated client discovery request message may not carry information about a network element capability type of a requested network element. For example, the first vertical federated server sends a request message to the VFLSF by using an Nvflsf_VFLClientDiscovery_Request or Nvflsf_VFLSlaveClientDiscovery_Request service operation, and the VFLSF may learn, by using the service operation, that the first vertical federated server requests (discovers) a vertical federated client/slave vertical federated client. For ease of understanding, this embodiment of this application is mainly described by using the first solution as an example.

Optionally, in addition to the foregoing described information, the vertical federated client discovery request message may further include information such as the identifier of the vertical federated learning group, or a requirement/selection information for the requested vertical federated client. For example, the requirement/selection information for the requested vertical federated client includes one or more of the following: a time period in which a vertical federated client is expected to support the vertical federated learning, data sample information expected to be supported by the vertical federated client, data feature information expected to be supported by the vertical federated client, or a training mode expected to be supported by the vertical federated client.

It should be noted that, if the vertical federated client selection request message in step S405 does not include the requirement for the requested vertical federated client, the first vertical federated server may determine the requirement for the requested vertical federated client by itself. If the vertical federated client selection request message in step S405 includes the requirement for the requested vertical federated client, the requirement for the requested vertical federated client included in the vertical federated client discovery request message may be the requirement for the requested vertical federated client included in the vertical federated client selection request message in step S405. Optionally, the requirement for the requested vertical federated client included in the vertical federated client selection request message in step S405 may also be adjusted (for example, added/deleted/modified), and an adjusted requirement for the requested vertical federated client is used as the requirement for the requested vertical federated client carried in the vertical federated client discovery request message in step S406. This is not limited in this application.

S407: The VFLSF sends a vertical federated client discovery response message to the first vertical federated server. Correspondingly, the first vertical federated server receives the vertical federated client discovery response message from the VFLSF.

In some feasible implementations, the vertical federated client discovery response message includes at least one (slave) vertical federated client that supports the specific model type information. It should be understood that, when the vertical federated client is not differentiated into a master vertical federated client or a slave vertical federated client, the vertical federated client discovery response message includes at least one vertical federated client that supports the specific model type information. Usually, the at least one vertical federated client is included in the (N-1) vertical federated clients. When the vertical federated client is differentiated into a master vertical federated client or a slave vertical federated client, the vertical federated client discovery response message includes at least one slave vertical federated client that supports the specific model type information. Usually, the at least one slave vertical federated client is included in the (N-1) slave vertical federated clients.

Optionally, in addition to the foregoing described information, the vertical federated client discovery response message may further include data sample information, data feature information, and/or the like supported by each of the at least one (slave) vertical federated client. This is not limited in this application.

S408: The first vertical federated server sends a vertical federated learning preparation request message to the at least one (slave) vertical federated client. Correspondingly, the at least one (slave) vertical federated client receives the vertical federated learning preparation request message from the first vertical federated server.

It should be noted that, when the vertical federated client is not differentiated into a master vertical federated client or a slave vertical federated client, the first vertical federated server sends the vertical federated learning preparation request message to the at least one discovered vertical federated client. When the vertical federated client is differentiated into a master vertical federated client or a slave vertical federated client, the first vertical federated server sends the vertical federated learning preparation request message to the at least one discovered slave vertical federated client. For ease of description, the following provides a general description by using an example in which the first vertical federated server sends the vertical federated learning preparation request message to the at least one (slave) vertical federated client.

The vertical federated learning preparation request message is for requesting a vertical federated client to join the vertical federated learning (or indicating to perform a vertical federated learning preparation process, for example, determining, based on information such as computational power of the vertical federated client, whether to agree to join the vertical federated learning). Herein, joining the vertical federated learning is joining the vertical federated learning of the foregoing specific model. For example, there may be the following two implementations of requesting a vertical federated client to join the vertical federated learning by using the vertical federated learning preparation request message.

Implementation 1: The vertical federated learning preparation request message may carry indication information (that is, third indication information), where the third indication information indicates the vertical federated client to perform the vertical federated learning preparation process (or indicates the vertical federated client to join the vertical federated learning). For example, the vertical federated learning preparation request message includes a field (for example, the field may be described as VFL preparation Flag), and a value of the field indicates the vertical federated client to perform the vertical federated learning preparation process. For example, VFL preparation Flag = 1, indicating the vertical federated client to join the vertical federated learning.

Implementation 2: If a name of the vertical federated learning preparation request message may indicate that the vertical federated client is requested to join the vertical federated learning, the vertical federated learning preparation request message may not carry a VFL preparation flag. For example, the first vertical federated server sends a request message to the (slave) vertical federated client by using an Nvflclient_VFLPreparation_Request service operation, and the (slave) vertical federated client may learn, by using the service operation, that the first vertical federated server requests the (slave) vertical federated client to join the vertical federated learning. For ease of understanding, this embodiment of this application is mainly described by using the first solution as an example.

Optionally, in addition to the foregoing described information, the vertical federated learning preparation request message further includes a time requirement for the vertical federated learning, a data sample requirement for the vertical federated learning, a data feature requirement for the vertical federated learning, information (for example, a master VFL client instance) about the first master vertical federated client, or the like.

S409: The at least one (slave) vertical federated client determines whether to agree to join the vertical federated learning.

It should be noted that, when the vertical federated client is not differentiated into a master vertical federated client or a slave vertical federated client, the at least one vertical federated client determines whether to agree to join the vertical federated learning. When the vertical federated client is differentiated into a master vertical federated client or a slave vertical federated client, the at least one slave vertical federated client determines whether to agree to join the vertical federated learning. For ease of description, the following provides a general description by using an example in which the at least one (slave) vertical federated client determines whether to agree to join the vertical federated learning.

Usually, a (slave) vertical federated client that receives the vertical federated learning preparation request message may determine, based on information such as computational power and sample space (or referred to as a data sample set) of the client, whether to agree to join the vertical federated learning.

It should be understood that, when the vertical federated client is differentiated into a master vertical federated client or a slave vertical federated client, a slave vertical federated client may perform a sample alignment process with a master vertical federated client, and determine, based on a sample alignment result, whether to join the vertical federated learning. For example, if a quantity of overlapping sample spaces between the slave vertical federated client and the master vertical federated client is not less than a preset quantity threshold, the slave vertical federated client agrees to join the vertical federated learning; or if a quantity of overlapping sample spaces between the slave vertical federated client and the master vertical federated client is less than a preset threshold, the slave vertical federated client may not agree to join the vertical federated learning. For example, it is assumed that the preset quantity threshold is 3. If a data sample set of the master vertical federated client includes data of (a user 1, a user 2, a user 3, and a user 4), a data sample set of a slave vertical federated client 1 includes data of (the user 1, the user 2, the user 3, and a user 5), and a data sample set of a slave vertical federated client 2 includes data of (the user 1, the user 5, a user 6, and a user 7), because a quantity of overlapping sample spaces between the slave vertical federated client 1 and the master vertical federated client is 3 (that is, the user 1, the user 2, and the user 3), and a quantity of overlapping sample spaces between the slave vertical federated client 2 and the master vertical federated client is 1 (that is, the user 1), the slave vertical federated client 1 agrees to join the vertical federated learning, and the slave vertical federated client 2 does not agree to join the vertical federated learning.

It should be understood that, when the vertical federated client is not differentiated into a master vertical federated client or a slave vertical federated client, every two vertical federated clients may perform a sample alignment process, and determine, based on a sample alignment result, whether to join the vertical federated learning. For example, it is assumed that the preset quantity threshold is 3. If a data sample set of a vertical federated client 1 includes data of (a user 1, a user 2, a user 3, and a user 4), a data sample set of a vertical federated client 2 includes data of (the user 1, the user 2, the user 3, and a user 5), and a data sample set of a vertical federated client 3 includes data of (the user 1, the user 5, a user 6, and a user 7), because a quantity of overlapping sample spaces between the vertical federated client 1 and the vertical federated client 2 is 3 (that is, the user 1, the user 2, and the user 3), a quantity of overlapping sample spaces between the vertical federated client 1 and the vertical federated client 3 is 2 (that is, the user 1), and a quantity of overlapping sample spaces between the vertical federated client 2 and the vertical federated client 3 is 2 (that is, the user 1 and the user 2), the vertical federated client 1 and the vertical federated client 2 agree to join the vertical federated learning, and the vertical federated client 3 does not agree to join the vertical federated learning.

S4010: The at least one (slave) vertical federated client sends a vertical federated learning preparation response message to the first vertical federated server. Correspondingly, the first vertical federated server receives the vertical federated learning preparation response message from the at least one (slave) vertical federated client.

It should be noted that, when the vertical federated client is not differentiated into a master vertical federated client or a slave vertical federated client, the at least one vertical federated client sends the vertical federated learning preparation response message to the first vertical federated server; or when the vertical federated client is differentiated into a master vertical federated client or a slave vertical federated client, the at least one slave vertical federated client sends the vertical federated learning preparation response message to the first vertical federated server. For ease of description, the following provides a general description by using an example in which the at least one (slave) vertical federated client sends the vertical federated learning preparation response message to the first vertical federated server.

It should be understood that the vertical federated learning preparation response message indicates whether a (slave) vertical federated client agrees to join the vertical federated learning.

S4011: The first vertical federated server determines a (slave) vertical federated client that finally participates in the vertical federated learning.

The first vertical federated server may determine, based on the vertical federated learning preparation response message sent by the at least one (slave) vertical federated client, a (slave) vertical federated client that finally participates in the vertical federated learning.

Example 1: For example, the vertical federated client does not need to be differentiated into a master vertical federated client or a slave vertical federated client. It is assumed that N = 4, to be specific, there are four vertical federated clients in total: a vertical federated client 0 to a vertical federated client 3. The first vertical federated client is the vertical federated client 3 (that is, the vertical federated client 3 is a client initiating the vertical federated learning), and the other three vertical federated clients are respectively the vertical federated client 0 to the vertical federated client 2. Further, it is assumed that the at least one vertical federated client fed back by the VFLSF in step S407 is the vertical federated client 0, the vertical federated client 1, and the vertical federated client 2. In this case, the first vertical federated server may send a vertical federated learning preparation request message to the three vertical federated clients, and receive vertical federated learning preparation response messages sent by the three vertical federated clients. If the vertical federated learning preparation response message fed back by the vertical federated client 0 indicates that the vertical federated client 0 does not agree to join the vertical federated learning, and the vertical federated learning preparation response messages fed back by the vertical federated client 1 and the vertical federated client 2 separately indicate that the vertical federated client 1 and the vertical federated client 2 agree to join the vertical federated learning, the first vertical federated server may determine that vertical federated clients finally participating in the vertical federated learning are the vertical federated client 1 and the vertical federated client 2.

Example 2: For example, the vertical federated client needs to be differentiated into a master vertical federated client or a slave vertical federated client. It is assumed that N = 5, to be specific, there are five slave vertical federated clients in total, which are respectively a slave vertical federated client 4 serving as the first slave vertical federated client and four other slave vertical federated clients (namely, a slave vertical federated client 0 to a slave vertical federated client 3). Further, it is assumed that the at least one slave vertical federated client fed back by the VFLSF in step S407 is the slave vertical federated client 0, the slave vertical federated client 1, and the slave vertical federated client 2. In this case, the first vertical federated server may send a vertical federated learning preparation request message to the three slave vertical federated clients, and receive vertical federated learning preparation response messages sent by the three slave vertical federated clients. If the vertical federated learning preparation response message fed back by the slave vertical federated client 0 indicates that the slave vertical federated client 0 does not agree to join the vertical federated learning, and the vertical federated learning preparation response messages fed back by the slave vertical federated client 1 and the slave vertical federated client 2 separately indicate that the slave vertical federated client 1 and the slave vertical federated client 2 agree to join the vertical federated learning, the first vertical federated server may determine that slave vertical federated clients finally participating in the vertical federated learning are the slave vertical federated client 1 and the slave vertical federated client 2.

S4012: The first vertical federated server sends a vertical federated client selection response message to the first (master) vertical federated client. Correspondingly, the first (master) vertical federated client receives the vertical federated client selection response message from the first vertical federated server.

It should be noted that, when the vertical federated client is not differentiated into a master vertical federated client or a slave vertical federated client, the first vertical federated server sends the vertical federated client selection response message to the first vertical federated client. When the vertical federated client is differentiated into a master vertical federated client or a slave vertical federated client, the first vertical federated server sends the vertical federated client selection response message to the first master vertical federated client. For ease of description, the following provides a general description by using an example in which the first vertical federated server sends the vertical federated client selection response message to the first (master) vertical federated client.

Usually, the vertical federated client selection response message includes information about the (slave) vertical federated client that finally participates in the vertical federated learning and that is determined in the foregoing step S4011. It should be noted that, when the vertical federated client is not differentiated into a master vertical federated client or a slave vertical federated client, the vertical federated client selection response message includes information about the vertical federated client that finally participates in the vertical federated learning and that is determined in the foregoing step S4011. When the vertical federated client is differentiated into a master vertical federated client or a slave vertical federated client, the vertical federated client selection response message includes information about the slave vertical federated client that finally participates in the vertical federated learning and that is determined in the foregoing step S4011.

The foregoing example 1 is used as an example. The vertical federated client selection response message includes information about the vertical federated client 1 and the vertical federated client 2. The foregoing example 2 is used as another example. The vertical federated client selection response message includes information about the slave vertical federated client 1 and the slave vertical federated client 2.

It should be noted that the embodiment corresponding to FIG. 4 mainly describes a vertical federated learning process in which the first master vertical federated client initiates the vertical federated learning and the first vertical federated server is responsible for coordination (including discovering other slave vertical federated clients, obtaining information about whether the other slave vertical federated clients can participate in the vertical federated learning, and the like).

In a case of not specifying a master/slave client, if a first network element is the first vertical federated client, a first request message that is sent by the first vertical federated client to a network repository function network element and that is for requesting a vertical federated server is equivalent to the vertical federated server discovery request message in the case of not specifying a master/slave client in step S403 in FIG. 4, and a first response message fed back by the network repository function network element to the first vertical federated client is equivalent to the vertical federated server discovery response message in the case of not specifying a master/slave client in step S404 in FIG. 4.

In a case of specifying a master/slave client, if a first network element is the first master vertical federated client, a first request message that is sent by the first master vertical federated client to a network repository function network element and that is for requesting a vertical federated server is equivalent to the vertical federated server discovery request message in the case of specifying a master/slave client in step S403 in FIG. 4, and a first response message fed back by the network repository function network element to the first master vertical federated client is equivalent to the vertical federated server discovery response message in the case of specifying a master/slave client in step S404 in FIG. 4.

When the first network element is the first vertical federated server, a first request message that is sent by the first vertical federated server to the network repository function network element and that is for requesting a vertical federated client is equivalent to the vertical federated client discovery request message in the case of not specifying a master/slave client in step S406 in FIG. 4, and a first response message fed back by the network repository function network element to the first vertical federated server is equivalent to the vertical federated client discovery response message in the case of not specifying a master/slave client in step S407 in FIG. 4.

When the first network element is the first vertical federated server, a first request message that is sent by the first vertical federated server to the network repository function network element and that is for requesting a slave vertical federated client is equivalent to the vertical federated client discovery request message in the case of specifying a master/slave client in step S406 in FIG. 4, and a first response message fed back by the network repository function network element to the first vertical federated server is equivalent to the vertical federated client discovery response message in the case of specifying a master/slave client in step S407 in FIG. 4.

When a fourth network element is the first vertical federated server, in a case of not specifying a master/slave client, a second request message sent by the first vertical federated client to the first vertical federated server is equivalent to the vertical federated client selection request message in the case of not specifying a master/slave client in step S405 in FIG. 4, and a second response message fed back by the first vertical federated server to the first vertical federated client is equivalent to the vertical federated client selection response message in the case of not specifying a master/slave client in step S4012 in FIG. 4.

When a fourth network element is the first vertical federated server, in a case of not specifying a master/slave client, a second request message sent by the first master vertical federated client to the first vertical federated server is equivalent to the vertical federated client selection request message in the case of specifying a master/slave client in step S405 in FIG. 4, and a second response message fed back by the first vertical federated server to the first master vertical federated client is equivalent to the vertical federated client selection response message in the case of specifying a master/slave client in step S4012 in FIG. 4.

In a case of not specifying a master/slave client, a fourth request message sent by the first vertical federated server to the at least one vertical federated client is equivalent to the vertical federated learning preparation request message in the case of not specifying a master/slave client in step S408 in FIG. 4, and a fourth response message fed back by the at least one vertical federated client to the first vertical federated server is equivalent to the vertical federated learning preparation response message in the case of not specifying a master/slave client in step S4010 in FIG. 4.

In a case of specifying a master/slave client, a fourth request message sent by the first vertical federated server to the at least one slave vertical federated client is equivalent to the vertical federated learning preparation request message in the case of specifying a master/slave client in step S408 in FIG. 4, and a fourth response message fed back by the at least one slave vertical federated client to the first vertical federated server is equivalent to the vertical federated learning preparation response message in the case of specifying a master/slave client in step S4010 in FIG. 4.

In this embodiment of this application, the vertical federated client and the vertical federated server register vertical federated learning capability information with the VFLSF, so that when initiating the vertical federated learning, the first (master) vertical federated client can discover, via the VFLSF, a first vertical federated server that satisfies a requirement, and discover, via the first vertical federated server, another (slave) vertical federated client that satisfies the requirement. This embodiment provides such a method for registering and discovering a vertical federated learning participant, so that an initiator can discover a proper participant that can participate in a vertical federated learning service, thereby laying a foundation for subsequent vertical federated learning model training.

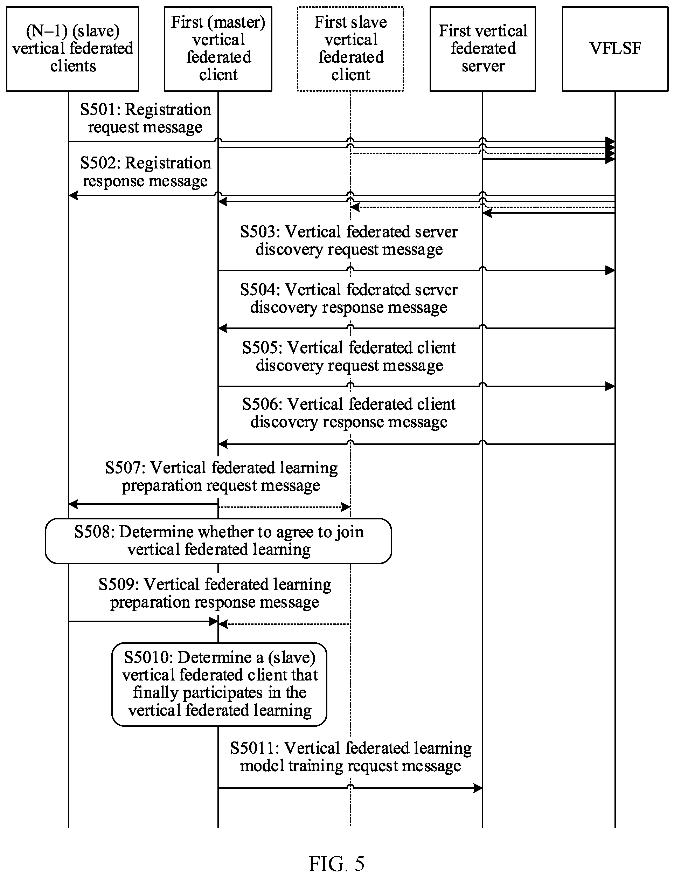

Refer to FIG. 5. FIG. 5 is another diagram of an interaction procedure of a communication method according to an embodiment of this application. As shown in FIG. 5, the communication method includes the following step S501 to S5011. The method shown in FIG. 5 may be performed by a vertical federated client, a vertical federated server, and a VFLSF, or the method shown in FIG. 5 may be performed by chips in a vertical federated client, a vertical federated server, and a VFLSF. For ease of description, FIG. 5 mainly uses the vertical federated client, the vertical federated server, and the VFLSF as an example for description. It should be noted that FIG. 5 is a schematic flowchart of a method embodiment of this application, and shows detailed communication steps or operations of the method. However, these steps or operations are merely examples. Other operations or variants of various operations in FIG. 5 may be further performed in embodiments of this application. In addition, the steps in FIG. 5 may be separately performed in an order different from an order shown in FIG. 5, and possibly, not all operations in FIG. 5 need to be performed.

S501: A vertical federated client and a vertical federated server separately send a registration request message to a VFLSF. Correspondingly, the VFLSF receives the registration request message from the vertical federated client and the vertical federated server.

S502: The VFLSF separately sends a registration response message to the vertical federated client and the vertical federated server. Correspondingly, the vertical federated client and the vertical federated server separately receive the registration response message from the VFLSF.

S503: A first (master) vertical federated client sends a vertical federated server discovery request message to the VFLSF. Correspondingly, the VFLSF receives the vertical federated server discovery request message from the first (master) vertical federated client.

S504: The VFLSF sends a vertical federated server discovery response message to the first (master) vertical federated client. Correspondingly, the first (master) vertical federated client receives the vertical federated server discovery response message from the VFLSF.

Herein, for descriptions of step S501 to step S504, refer to the descriptions of step S401 to step S404 in FIG. 4. Details are not described herein again.

S505: The first (master) vertical federated client sends a vertical federated client discovery request message to the VFLSF. Correspondingly, the VFLSF receives the vertical federated client discovery request message from the first (master) vertical federated client.

It should be noted that, when the vertical federated client is not differentiated into a master vertical federated client or a slave vertical federated client, a first vertical federated client sends the vertical federated client discovery request message to the VFLSF. When the vertical federated client is differentiated into a master vertical federated client or a slave vertical federated client, a first master vertical federated client sends the vertical federated client discovery request message to the VFLSF. For ease of description, the following provides a general description by using an example in which the first (master) vertical federated client sends the vertical federated client discovery request message to the VFLSF.

It should be understood that, a difference between FIG. 5 and FIG. 4 lies in that, in this application, the first (master) vertical federated client may directly send the vertical federated client discovery request message to the VFLSF.

In some feasible implementations, the vertical federated client discovery request message may include the foregoing specific model type information. Therefore, the vertical federated client discovery request message is for requesting a vertical federated client that supports the specific model type information. In some other feasible implementations, the vertical federated client discovery request message may not include the foregoing specific model type information. Therefore, the vertical federated client discovery request message is for requesting a vertical federated client. It should be understood that, when the vertical federated client discovery request message does not include the specific model type information, subsequently, the first (master) vertical federated client further needs to interact with each vertical federated client fed back by the VFLSF, to determine a specific vertical federated client/specific vertical federated clients that supports/support the specific model type information. This is similar to the operation performed when the vertical federated server discovery request message in S403 and S404 in FIG. 4 does not include the specific model type information. Details are not described herein again. For ease of understanding, an example in which the vertical federated client discovery request message may include the specific model type information is mainly used for illustration below.

It should be understood that, when the vertical federated client is not differentiated into a master vertical federated client or a slave vertical federated client, the vertical federated client discovery request message is for requesting a vertical federated client that supports the specific model type information. When the vertical federated client is differentiated into a master vertical federated client or a slave vertical federated client, the vertical federated client discovery request message is for requesting a slave vertical federated client that supports the specific model type information.

It should be understood that there may be the following two implementations in which the vertical federated client discovery request message indicates a network element that is requested (discovered).

Implementation 1: Information about a network element capability type (that is, a vertical federated client/slave vertical federated client) of a requested network element may be carried in the vertical federated client discovery request message, to indicate a network element that the vertical federated client discovery request message is for requesting (discovering). For example, the vertical federated client discovery request message includes a field (for example, the field may be described as VFL capability type), and the field is for carrying a network element capability type of a network element requested by the vertical federated client discovery request message. For example, VFL capability type = VFL client/ slave VFL client, indicating that the vertical federated client/slave vertical federated client is requested.

Implementation 2: If a name of the vertical federated client discovery request message may indicate that the message is a request message for requesting the vertical federated client/slave vertical federated client, the vertical federated client discovery request message may not carry information about a network element capability type of a requested network element. For example, the first (master) vertical federated client sends a request message to the VFLSF by using an Nvflsf_VFLClientDiscovery_Request or Nvflsf_VFLSlaveClientDiscovery_Request service operation, and the VFLSF may learn, by using the service operation, that the first (master) vertical federated client requests (discovers) a vertical federated client/slave vertical federated client. For ease of understanding, this embodiment of this application is mainly described by using the first solution as an example.

Optionally, in addition to the foregoing described information, the vertical federated client discovery request message may further include information such as the identifier of the vertical federated learning group, or a requirement/selection information for the requested vertical federated client. For example, the requirement for the requested vertical federated client includes one or more of the following: a time period in which a vertical federated client is expected to support the vertical federated learning, data sample information expected to be supported by the vertical federated client, data feature information expected to be supported by the vertical federated client, a training mode expected to be supported by the vertical federated client, or an overlap degree of sample space.

S506: The VFLSF sends a vertical federated client discovery response message to the first (master) vertical federated client. Correspondingly, the first (master) vertical federated client receives the vertical federated client discovery response message from the VFLSF.

In some feasible implementations, the vertical federated client discovery response message includes at least one (slave) vertical federated client that supports the specific model type information. It should be understood that, when the vertical federated client is not differentiated into a master vertical federated client or a slave vertical federated client, the VFLSF sends the vertical federated client discovery response message to the first vertical federated client, where the vertical federated client discovery response message includes at least one vertical federated client that supports the specific model type information. Usually, the at least one vertical federated client is included in (N-1) vertical federated clients. When the vertical federated client is differentiated into a master vertical federated client or a slave vertical federated client, the VFLSF sends the vertical federated client discovery response message to the first master vertical federated client, where the vertical federated client discovery response message includes at least one slave vertical federated client that supports the specific model type information. Usually, the at least one slave vertical federated client is included in N slave vertical federated clients, and the N slave vertical federated clients herein are (N-1) slave vertical federated clients and a first slave vertical federated client. For ease of description, the following provides a general description by using an example in which the VFLSF sends the vertical federated client discovery response message to the first (master) vertical federated client and the vertical federated client discovery response message includes the at least one (slave) vertical federated client.

Optionally, in addition to the foregoing described information, the vertical federated client discovery response message may further include data sample information, data feature information, and/or the like supported by each of the at least one (slave) vertical federated client. This is not limited in this application.

Optionally, in some feasible implementations, the messages in step S503 and step S505 in this embodiment of this application may alternatively be a same message, for example, a vertical federated server and vertical federated client discovery request message. Correspondingly, the messages in step S504 and step S506 may alternatively be a same message, for example, a vertical federated server and vertical federated client discovery response message. In other words, the vertical federated server and vertical federated client discovery request message may be for requesting both a vertical federated server and a vertical federated client. Similarly, in some feasible implementations, the vertical federated server and vertical federated client discovery request message may include the specific model type information. Therefore, the vertical federated server and vertical federated client discovery request message is for requesting a vertical federated server and a vertical federated client that support the specific model type information. In some other feasible implementations, the vertical federated server and vertical federated client discovery request message may not include the specific model type information. Therefore, the vertical federated server and vertical federated client discovery request message is for requesting a vertical federated server and a vertical federated client. Details are not described herein again.

S507: The first (master) vertical federated client sends a vertical federated learning preparation request message to the at least one (slave) vertical federated client. Correspondingly, the at least one (slave) vertical federated client receives the vertical federated learning preparation request message from the first (master) vertical federated client.

S508: The at least one (slave) vertical federated client determines whether to agree to join the vertical federated learning.

S509: The at least one (slave) vertical federated client sends a vertical federated learning preparation response message to the first (master) vertical federated client. Correspondingly, the first (master) vertical federated client receives the vertical federated learning preparation response message from the at least one (slave) vertical federated client.

S5010: The first (master) vertical federated client determines a (slave) vertical federated client that finally participates in the vertical federated learning.

Herein, for descriptions of step S507 to step S5010, refer to the descriptions of step S408 to step S4011 in FIG. 4. Details are not described herein again.

S5011: The first (master) vertical federated client sends a vertical federated learning model training request message to the first vertical federated server. Correspondingly, the first vertical federated server receives the vertical federated learning model training request message from the first (master) vertical federated client.

It should be noted that, when the vertical federated client is not differentiated into a master vertical federated client or a slave vertical federated client, the first master vertical federated client sends the vertical federated learning model training request message to the first vertical federated server. When the vertical federated client is differentiated into a master vertical federated client or a slave vertical federated client, the first master vertical federated client sends the vertical federated learning model training request message to the first vertical federated server. For ease of description, the following provides a general description by using an example in which the first (master) vertical federated client sends the vertical federated learning model training request message to the first vertical federated server.

Herein, the first vertical federated server may be one of one or more vertical federated servers that support the specific model type information and that are fed back by the VFLSF in S504. A specific selection manner is not limited.

The vertical federated learning model training request message includes information about all (slave) vertical federated clients that finally participate in the vertical federated learning.

It should be noted that the embodiment corresponding to FIG. 5 mainly describes a vertical federated learning process in which the first master vertical federated client initiates the vertical federated learning and the first master vertical federated client is responsible for coordination (that is, responsible for discovering and selecting a slave vertical federated client, and the like).

In a case of not specifying a master/slave client, if a first network element is the first vertical federated client, a first request message that is sent by the first vertical federated client to a network repository function network element and that is for requesting a vertical federated server is equivalent to the vertical federated server discovery request message in the case of not specifying a master/slave client in step S503 in FIG. 5, and a first response message fed back by the network repository function network element to the first vertical federated client is equivalent to the vertical federated server discovery response message in the case of not specifying a master/slave client in step S504 in FIG. 5.

In a case of specifying a master/slave client, if a first network element is the first master vertical federated client, a first request message that is sent by the first master vertical federated client to a network repository function network element and that is for requesting a vertical federated server is equivalent to the vertical federated server discovery request message in the case of specifying a master/slave client in step S503 in FIG. 5, and a first response message fed back by the network repository function network element to the first master vertical federated client is equivalent to the vertical federated server discovery response message in the case of specifying a master/slave client in step S504 in FIG. 5.

In a case of not specifying a master/slave client, if a first network element is the first vertical federated client, a first request message that is sent by the first vertical federated client to a network repository function network element and that is for requesting a vertical federated client is equivalent to the vertical federated client discovery request message in the case of not specifying a master/slave client in step S505 in FIG. 5, and a first response message fed back by the network repository function network element to the first vertical federated client is equivalent to the vertical federated client discovery response message in the case of not specifying a master/slave client in step S506 in FIG. 5.

In a case of specifying a master/slave client, if a first network element is the first master vertical federated client, a first request message that is sent by the first master vertical federated client to a network repository function network element and that is for requesting a slave vertical federated client is equivalent to the vertical federated client discovery request message in the case of specifying a master/slave client in step S505 in FIG. 5, and a first response message fed back by the network repository function network element to the first master vertical federated client is equivalent to the vertical federated client discovery response message in the case of specifying a master/slave client in step S506 in FIG. 5.

In a case of not specifying a master/slave client, a fourth request message sent by the first vertical federated client to the at least one vertical federated client is equivalent to the vertical federated learning preparation request message in the case of not specifying a master/slave client in step S507 in FIG. 5, and a fourth response message fed back by the at least one vertical federated client to the first vertical federated client is equivalent to the vertical federated learning preparation response message in the case of not specifying a master/slave client in step S509 in FIG. 5.

In a case of specifying a master/slave client, a fourth request message sent by the first master vertical federated client to the at least one slave vertical federated client is equivalent to the vertical federated learning preparation request message in the case of specifying a master/slave client in step S507 in FIG. 5, and a fourth response message fed back by the at least one slave vertical federated client to the first master vertical federated client is equivalent to the vertical federated learning preparation response message in the case of specifying a master/slave client in step S509 in FIG. 5.

In a case of not specifying a master/slave client, a fifth request message sent by the first vertical federated client to the first vertical federated server is equivalent to the vertical federated learning model training request message in the case of not specifying a master/slave client in step S5011 in FIG. 5. In a case of specifying a master/slave client, a fifth request message sent by the first master vertical federated client to the first vertical federated server is equivalent to the vertical federated learning model training request message in the case of specifying a master/slave client in step S5011 in FIG. 5.

In this embodiment of this application, the vertical federated client and the vertical federated server register vertical federated learning capability information with the VFLSF, so that when initiating the vertical federated learning, the first (master) vertical federated client can discover, via the VFLSF, a first vertical federated server and another (slave) vertical federated client that satisfy a requirement. This embodiment provides such a method for registering and discovering a vertical federated learning participant, so that an initiator can discover a proper participant that can participate in a vertical federated learning service, thereby laying a foundation for subsequent vertical federated learning model training.

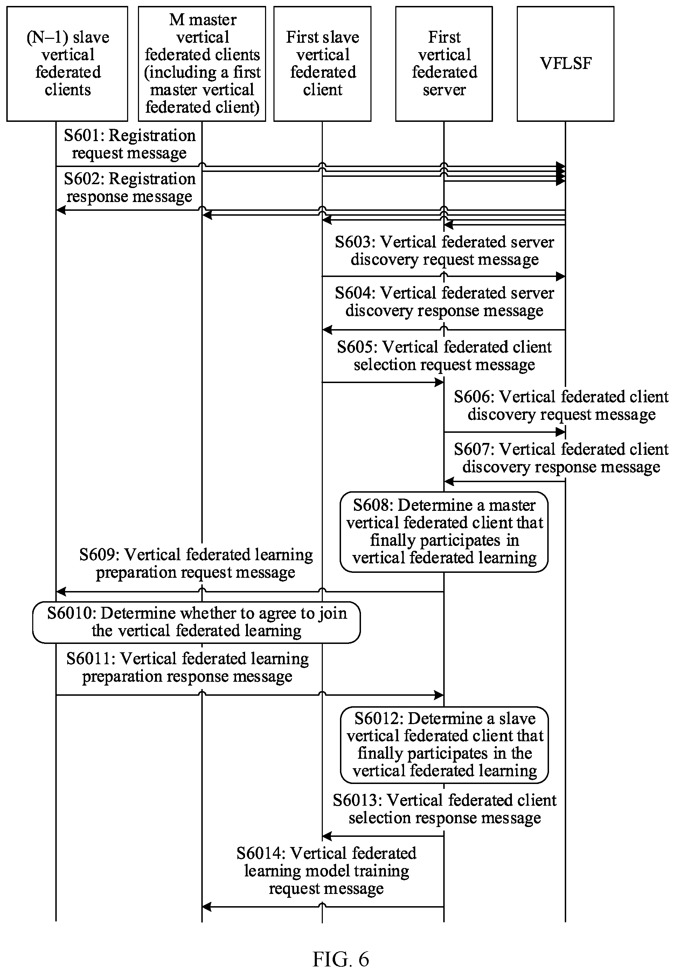

Refer to FIG. 6. FIG. 6 is another diagram of an interaction procedure of a communication method according to an embodiment of this application. As shown in FIG. 6, the communication method includes the following step S601 to S6014. The method shown in FIG. 6 may be performed by a slave vertical federated client, a master vertical federated client, a vertical federated server, and a VFLSF, or the method shown in FIG. 6 may be performed by chips in a slave vertical federated client, a master vertical federated client, a vertical federated server, and a VFLSF. For ease of description, FIG. 6 mainly uses the slave vertical federated client, the master vertical federated client, the vertical federated server, and the VFLSF as an example for description. It should be noted that FIG. 6 is a schematic flowchart of a method embodiment of this application, and shows detailed communication steps or operations of the method. However, these steps or operations are merely examples. Other operations or variants of various operations in FIG. 6 may be further performed in embodiments of this application. In addition, the steps in FIG. 6 may be separately performed in an order different from an order shown in FIG. 6, and possibly, not all operations in FIG. 6 need to be performed.

S601: A vertical federated client and a vertical federated server separately send a registration request message to a VFLSF. Correspondingly, the VFLSF receives the registration request message from the vertical federated client and the vertical federated server.

Herein, the vertical federated client includes (N-1) slave vertical federated clients, M master vertical federated clients, and a first slave vertical federated client, where N is an integer greater than 1, and M is an integer greater than 0. Herein, the M master vertical federated clients include a first master vertical federated client.

For descriptions of the registration request message of the vertical federated client, refer to the related descriptions of the registration request message in the case of specifying a master vertical federated client or a slave vertical federated client in step S401 in FIG. 4. Details are not described herein again.

For descriptions of the registration request message of the server, refer to the related descriptions of the registration request message of the vertical federated server in step S401 in FIG. 4. Details are not described herein again.

S602: The VFLSF separately sends a registration response message to the vertical federated client and the vertical federated server. Correspondingly, the vertical federated client and the vertical federated server separately receive the registration response message from the VFLSF.

The registration response message herein indicates whether registration is successful.

S603: The first slave vertical federated client sends a vertical federated server discovery request message to the VFLSF. Correspondingly, the VFLSF receives the vertical federated server discovery request message from the first slave vertical federated client.

For example, when an operator expects to train an AI model (for example, a telecom package personalized recommendation model), and private data of a third-party AF needs to be used for the model, the operator may configure the first slave vertical federated client to trigger a vertical federated learning procedure.

S604: The VFLSF sends a vertical federated server discovery response message to the first slave vertical federated client. Correspondingly, the first slave vertical federated client receives the vertical federated server discovery response message from the VFLSF.

Herein, for understanding of step S603 and step S604, refer to the foregoing descriptions of step S403 and step S404 in FIG. 4. A unique difference lies in that initiators of the vertical federated server discovery request messages are different. In FIG. 6, the first slave vertical federated client initiates the vertical federated learning procedure (or referred to as sending the vertical federated server discovery request message), and in FIG. 4, the first (master) vertical federated client initiates the vertical federated learning procedure (or referred to as sending the vertical federated server discovery request message).

S605: The first slave vertical federated client sends a vertical federated client selection request message to the first vertical federated server. Correspondingly, the first vertical federated server receives the vertical federated client selection request message from the first slave vertical federated client.

It should be understood that the first slave vertical federated client may select one vertical federated server (for example, the first vertical federated server is used as an example for description) from one or more vertical federated servers that support specific model type information and that are fed back by the VFLSF, and send the vertical federated client selection request message to the selected first vertical federated server.

In some feasible implementations, the vertical federated client selection request message may include the specific model type information. Therefore, the vertical federated client selection request message is for requesting a master vertical federated client and a slave vertical federated client that support the specific model type information. In some other feasible implementations, when one vertical federated server supports only one type of model type information, the vertical federated client selection request message may not include the specific model type information. Therefore, the vertical federated client selection request message is for requesting (discovering) a master vertical federated client and a slave vertical federated client. It should be understood that, when the vertical federated client selection request message does not include the specific model type information, subsequently, the first vertical federated server further needs to interact with each master vertical federated client and each slave vertical federated client that are fed back by the VFLSF, to determine a specific master vertical federated client/specific master vertical federated clients that supports/support the specific model type information and a specific slave vertical federated client/specific slave vertical federated clients that supports/support the specific model type information. This is similar to the operation performed when the vertical federated server discovery request message in S403 and S404 does not include the specific model type information. Details are not described herein again. For ease of understanding, an example in which the vertical federated client selection request message may include the specific model type information is mainly used for illustration below.

It should be understood that there may be the following two implementations in which the vertical federated client selection request message indicates a network element that is requested (discovered).

Implementation 1: Information about a network element capability type (that is, a master vertical federated client and a slave vertical federated client) of a requested network element may be carried in the vertical federated client selection request message, to indicate a network element that the vertical federated client selection request message is for requesting (discovering). For example, the vertical federated client selection request message includes a field (for example, the field may be described as VFL client selection Flag), and the field is for carrying a network element capability type (that is, second indication information) of a network element requested by the vertical federated client selection request message. For example, VFL client selection Flag = master VFL client and slave VFL client, indicating that a master vertical federated client and a slave vertical federated client are requested. For another example, VFL client selection Flag = VFL client, indicating that a vertical federated client is requested. For another example, the vertical federated client selection request message includes two fields (for example, the two fields are described as master VFL client selection Flag and slave VFL client selection Flag). When master VFL client selection Flag = 1, it indicates that a master vertical federated client is requested; when slave VFL client selection Flag = 1, it indicates that a slave vertical federated client is requested.

Implementation 2: If a name of the vertical federated client selection request message may indicate that the message is a request message for requesting the master vertical federated client and the slave vertical federated client, the vertical federated client selection request message may not carry information about a network element capability type of a requested network element. For example, the first slave vertical federated client sends a vertical federated client selection request message to the first vertical federated server by using an Nvflserver_VFLClientSelection_Request service operation, and the first vertical federated server may learn, by using the service operation, that the first slave vertical federated client needs to request (discover) a master vertical federated client and a slave vertical federated client. For ease of understanding, this embodiment of this application is mainly described by using the first solution as an example.

Optionally, the vertical federated client selection request message in this application may further indicate a network element capability type of the first slave vertical federated client, that is, indicate a network element capability type of an initiator of the vertical federated client selection request message, or indicate a network element capability type of the vertical federated learning initiator. The following mainly describes two implementations in which the network element capability type of the vertical federated learning initiator is indicated.

Implementation 1: Information about the network element capability type of the first slave vertical federated client may be carried in the vertical federated client selection request message, to indicate that the vertical federated learning initiator is a slave vertical federated client. For example, the vertical federated client selection request message includes a field (for example, the field may be described as VFL client indicator), and the field is for carrying information (that is, first indication information) about the vertical federated learning initiator. For example, VFL client indicator = slave VFL client, indicating that the vertical federated learning initiator is a slave vertical federated client.

Implementation 2: If the name of the vertical federated client selection request message may indicate the vertical federated learning initiator, the vertical federated client selection request message may not carry the information about the vertical federated learning initiator. For example, the first slave vertical federated client sends a vertical federated client selection request message to the first vertical federated server by using an Nvflserver_VFLClientSelection_Request service operation, and as defined, a requester of the Nvflserver_VFLClientSelection_Request service operation can only be a slave vertical federated client. In this case, the first vertical federated server may learn, by using the service operation, that the vertical federated learning initiator is a slave vertical federated client. For ease of understanding, this embodiment of this application is mainly described by using the first solution as an example.

It should be noted that: (1) When VFL client selection Flag can only indicate that the requested network element capability type is a vertical federated client (that is, VFL client selection Flag = VFL client), but cannot specifically indicate that the requested network element capability type is a master vertical federated client and a slave vertical federated client, the vertical federated client selection request message usually needs to carry the VFL client indicator to indicate the vertical federated learning initiator (that is, VFL client indicator = slave VFL client). In this way, a case in which the first vertical federated server cannot learn which network element needs to be discovered subsequently is avoided. In other words, the first vertical federated server may determine, based on VFL client selection Flag = VFL client and VFL client indicator = slave VFL client, that the network element capability type that needs to be discovered as requested in subsequent step S406 is a master vertical federated client and a slave vertical federated client. (2) When VFL client selection Flag can specifically indicate that the requested network element capability type is a master vertical federated client and a slave vertical federated client (that is, VFL client selection Flag = master VFL client and slave VFL client), or when VFL client selection Flag includes master VFL client selection Flag and slave VFL client selection Flag, the vertical federated client selection request message may carry the VFL client indicator, or may not carry the VFL client indicator. This is because the first vertical federated server can directly determine, based on VFL client selection Flag = master VFL client and slave VFL client (or based on master VFL client selection Flag = 1, and slave VFL client selection Flag = 1), that network element capability types that need to be discovered as requested in subsequent step S406 are a master vertical federated client and a slave vertical federated client.

Optionally, in addition to the foregoing described information, the vertical federated client selection request message may further include information such as an identifier of a vertical federated learning group, a requirement/selection information for the requested master vertical federated client, and a requirement/selection information for the requested slave vertical federated client. For example, the requirement for the requested master/slave vertical federated client includes one or more of the following: a time period in which a master/slave vertical federated client is expected to support the vertical federated learning, data sample information expected to be supported by the master/slave vertical federated client, data feature information expected to be supported by the master/slave vertical federated client, a training mode expected to be supported by the master/slave vertical federated client, or an overlap degree of sample space.

S606: The first vertical federated server sends a vertical federated client discovery request message to the VFLSF. Correspondingly, the VFLSF receives the vertical federated client discovery request message from the first vertical federated server.

In some feasible implementations, the vertical federated client discovery request message may include the foregoing specific model type information. The vertical federated client discovery request message is for requesting a master vertical federated client and a slave vertical federated client that support the specific model type information.

It should be understood that there may be the following two implementations in which the vertical federated client discovery request message indicates a network element that is requested (discovered).

Implementation 1: Information (that is, fifth indication information) about a network element capability type (that is, a master vertical federated client and a slave vertical federated client) of a requested network element may be carried in the vertical federated client discovery request message, to indicate a network element that the vertical federated client discovery request message is for requesting (discovering). For example, the vertical federated client discovery request message includes a field (for example, the field may be described as VFL capability type), and the field is for carrying a network element capability type of a network element requested by the vertical federated client discovery request message. For example, VFL capability type = master VFL client and slave VFL client, indicating that the master vertical federated client and the slave vertical federated client are requested.

Implementation 2: If a name of the vertical federated client discovery request message may indicate that the message is a request message for requesting the master vertical federated client and the slave vertical federated client, the vertical federated client discovery request message may not carry information about a network element capability type of a requested network element. For example, the first vertical federated server sends a request message to the VFLSF by using an Nvflsf_VFLClientDiscovery_Request service operation, and the VFLSF may learn, by using the service operation, that the first vertical federated server requests (discovers) a master vertical federated client and a slave vertical federated client. For ease of understanding, this embodiment of this application is mainly described by using the first solution as an example.

Optionally, in addition to the foregoing described information, the vertical federated client discovery request message may further include information such as an identifier of a vertical federated learning group, a requirement/selection information for the requested master vertical federated client, and a requirement/selection information for the requested slave vertical federated client. For example, the requirement for the requested master/slave vertical federated client includes one or more of the following: a time period in which a master/slave vertical federated client is expected to support the vertical federated learning, data sample information expected to be supported by the master/slave vertical federated client, data feature information expected to be supported by the master/slave vertical federated client, or a training mode expected to be supported by the master/slave vertical federated client.

It should be noted that, if the vertical federated client selection request message in step S605 does not include the requirement for the requested master/slave vertical federated client, the first vertical federated server may determine the requirement for the requested master/slave vertical federated client by itself. If the vertical federated client selection request message in step S605 includes the requirement for the requested master/slave vertical federated client, the requirement for the requested master/slave vertical federated client included in the vertical federated client discovery request message may be the requirement for the requested master/slave vertical federated client included in the vertical federated client selection request message in step S605. Optionally, the requirement for the requested master/slave vertical federated client included in the vertical federated client selection request message in step S605 may also be adjusted (for example, added/deleted/modified), and an adjusted requirement for the requested master/slave vertical federated client is used as the requirement for the requested master/slave vertical federated client carried in the vertical federated client discovery request message in step S606. This is not limited in this application.

S607: The VFLSF sends a vertical federated client discovery response message to the first vertical federated server. Correspondingly, the first vertical federated server receives the vertical federated client discovery response message from the VFLSF.

In some feasible implementations, the vertical federated client discovery response message includes at least one master vertical federated client and at least one slave vertical federated client that support the specific model type information. Usually, the at least one master vertical federated client is included in the M master vertical federated clients, and the at least one slave vertical federated client is included in the (N-1) slave vertical federated clients.

Optionally, in addition to the foregoing described information, the vertical federated client discovery response message may further include data sample information and/or data feature information supported by each of the at least one master vertical federated client, data sample information and/or data feature information supported by each of the at least one slave vertical federated client, and the like. This is not limited in this application.

S608: The first vertical federated server determines a master vertical federated client that finally participates in the vertical federated learning.

It should be understood that, for the obtained at least one master vertical federated client, the first vertical federated server may select one master vertical federated client from the at least one master vertical federated client as the master vertical federated client that finally participates in the vertical federated learning. For example, the first vertical federated server may separately send a vertical federated learning preparation request message to the at least one master vertical federated client, receive a vertical federated learning preparation response message (not shown in FIG. 6) fed back by the at least one master vertical federated client, and then select, based on the response fed back by the at least one master vertical federated client, one master vertical federated client from a master vertical federated client that agrees to join the vertical federated learning as the master vertical federated client that finally participates in the vertical federated learning. For ease of description, in this embodiment of this application, an example in which the selected master vertical federated client is the first master vertical federated client is used for description.

S609: The first vertical federated server sends a vertical federated learning preparation request message to the at least one slave vertical federated client. Correspondingly, the at least one slave vertical federated client receives the vertical federated learning preparation request message from the first vertical federated server.

S6010: The at least one slave vertical federated client determines whether to agree to join the vertical federated learning.

S6011: The at least one slave vertical federated client sends a vertical federated learning preparation response message to the first vertical federated server. Correspondingly, the first vertical federated server receives the vertical federated learning preparation response message from the at least one slave vertical federated client.

S6012: The first vertical federated server determines a slave vertical federated client that finally participates in the vertical federated learning.

Herein, for understanding of step S609 to step S6012, refer to the related descriptions of step S408 to step S4011 in FIG. 4. Details are not described herein again.

S6013: The first vertical federated server sends a vertical federated client selection response message to the first slave vertical federated client. Correspondingly, the first slave vertical federated client receives the vertical federated client selection response message from the first vertical federated server.

Usually, the vertical federated client selection response message includes information about the first master vertical federated client that finally participates in the vertical federated learning and that is determined in the foregoing step S608.

S6014: The first vertical federated server sends a vertical federated learning model training request message to the first master vertical federated client. Correspondingly, the first master vertical federated client receives the vertical federated learning model training request message from the first vertical federated server.

Usually, the vertical federated learning model training request message includes information about the slave vertical federated client that finally participates in the vertical federated learning and that is determined in the foregoing step S6012.

It should be noted that the embodiment corresponding to FIG. 6 mainly describes the vertical federated learning process in which the first slave vertical federated client initiates the vertical federated learning and the first vertical federated server is responsible for coordination in the case of specifying a master/slave client.

If a first network element is the first slave vertical federated client, a first request message that is sent by the first slave vertical federated client to a network repository function network element and that is for requesting a vertical federated server is equivalent to the vertical federated server discovery request message in step S603 in FIG. 6, and a first response message fed back by the network repository function network element to the first slave vertical federated client is equivalent to the vertical federated server discovery response message in the case of specifying a master/slave client in step S604 in FIG. 6.

When the first network element is the first vertical federated server, a first request message that is sent by the first vertical federated server to the network repository function network element and that is for requesting a master vertical federated client and a slave vertical federated client is equivalent to the vertical federated client discovery request message in step S606 in FIG. 6, and a first response message fed back by the network repository function network element to the first vertical federated server is equivalent to the vertical federated client discovery response message in step S607 in FIG. 6.

When a fourth network element is the first vertical federated server, a second request message sent by the first slave vertical federated client to the first vertical federated server is equivalent to the vertical federated client selection request message in step S605 in FIG. 6, and a second response message fed back by the first vertical federated server to the first slave vertical federated client is equivalent to the vertical federated client selection response message in step S6013 in FIG. 6.

A fourth request message sent by the first vertical federated server to the at least one slave vertical federated client is equivalent to the vertical federated learning preparation request message in step S609 in FIG. 6, and a fourth response message fed back by the at least one slave vertical federated client to the first vertical federated server is equivalent to the vertical federated learning preparation response message in step S6011 in FIG. 6.

A seventh request message sent by the first vertical federated server to the first master vertical federated client is equivalent to the vertical federated learning model training request message in step S6014 in FIG. 6.

In this embodiment of this application, the vertical federated client and the vertical federated server register vertical federated learning capability information with the VFLSF, so that when initiating the vertical federated learning, the first slave vertical federated client can discover, via the VFLSF, a first vertical federated server that satisfies a requirement, and discover, via the first vertical federated server, a master vertical federated client and another slave vertical federated client that satisfy the requirement. This embodiment provides such a method for registering and discovering a vertical federated learning participant, so that an initiator can discover a proper participant that can participate in a vertical federated learning service, thereby laying a foundation for subsequent vertical federated learning model training.

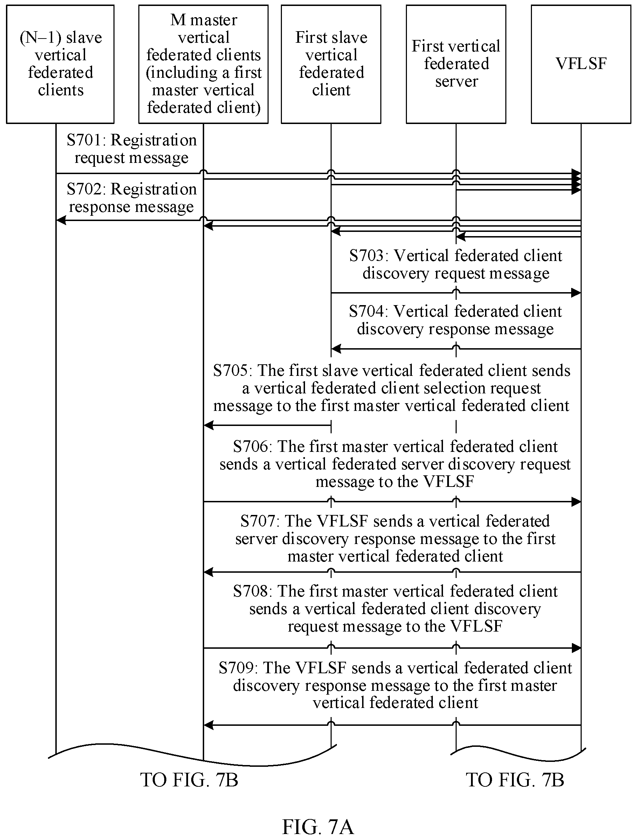

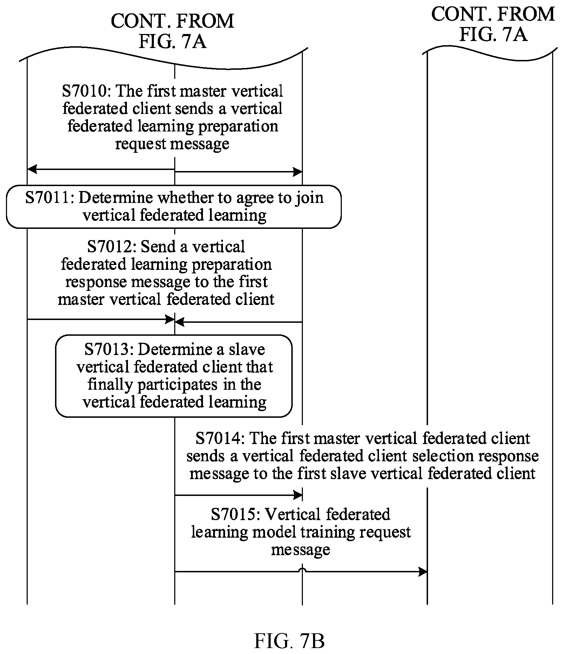

Refer to FIG. 7A and FIG. 7B. FIG. 7A and FIG. 7B are another diagram of an interaction procedure of a communication method according to an embodiment of this application. As shown in FIG. 7A and FIG. 7B, the communication method includes the following step S701 to S7014. The method shown in FIG. 7A and FIG. 7B may be performed by a vertical federated client, a vertical federated server, and a VFLSF, or the method shown in FIG. 7A and FIG. 7B may be performed by chips in a vertical federated client, a vertical federated server, and a VFLSF. For ease of description, FIG. 7A and FIG. 7B mainly use the vertical federated client, the vertical federated server, and the VFLSF as an example for description. It should be noted that FIG. 7A and FIG. 7B are a schematic flowchart of a method embodiment of this application, and shows detailed communication steps or operations of the method. However, these steps or operations are merely examples. Other operations or variants of various operations in FIG. 7A and FIG. 7B may be further performed in embodiments of this application. In addition, the steps in FIG. 7A and FIG. 7B may be separately performed in an order different from an order shown in FIG. 7A and FIG. 7B, and possibly, not all operations in FIG. 7A and FIG. 7B need to be performed.

S701: A vertical federated client and a vertical federated server separately send a registration request message to a VFLSF. Correspondingly, the VFLSF receives the registration request message from the vertical federated client and the vertical federated server.

Herein, the vertical federated client includes (N-1) slave vertical federated clients, M master vertical federated clients, and a first slave vertical federated client, where N is an integer greater than 1, and M is an integer greater than 0. Herein, the M master vertical federated clients include a first master vertical federated client.

For descriptions of the registration request message of the vertical federated client, refer to the related descriptions of the registration request message in the case of specifying a master vertical federated client or a slave vertical federated client in step S401 in FIG. 4. Details are not described herein again.

For descriptions of the registration request message of the server, refer to the related descriptions of the registration request message of the vertical federated server in step S401 in FIG. 4. Details are not described herein again.

S702: The VFLSF separately sends a registration response message to the vertical federated client and the vertical federated server. Correspondingly, the vertical federated client and the vertical federated server separately receive the registration response message from the VFLSF.

The registration response message herein indicates whether registration is successful.

S703: The first slave vertical federated client sends a vertical federated client discovery request message to the VFLSF. Correspondingly, the VFLSF receives the vertical federated client discovery request message from the first slave vertical federated client.

Usually, when the first slave vertical federated client determines that a specific model needs to be trained in a vertical federated learning manner, the first slave vertical federated client may send a vertical federated client discovery request message to the VFLSF (that is, a vertical federated learning initiator is the first slave vertical federated client). For example, if the first slave vertical federated client determines that a telecom package personalized recommendation model needs to be trained in a vertical federated learning manner, the specific model is the telecom package personalized recommendation model. Therefore, the first slave vertical federated client may send the vertical federated client discovery request message to the VFLSF.

In some feasible implementations, the vertical federated client discovery request message may include the specific model type information. Therefore, the vertical federated client discovery request message is for requesting (discovering) a master vertical federated client that supports the specific model type information. It should be understood that the specific model type information herein is information about a model that needs to be trained in a vertical federated learning manner, for example, a telecom package personalized recommendation model.

In some other feasible implementations, the vertical federated client discovery request message may not include the specific model type information. Therefore, the vertical federated client discovery request message is for requesting (discovering) a master vertical federated client.

It should be understood that there may be the following two implementations in which the vertical federated client discovery request message indicates a network element that is requested (discovered).

Implementation 1: Information about a network element capability type (that is, a master vertical federated client) supported by a requested network element may be carried in the vertical federated client discovery request message, to indicate a network element that the vertical federated client discovery request message is for requesting (discovering). For example, the vertical federated client discovery request message includes a field (for example, the field may be described as VFL capability type), and the field is for carrying a network element capability type of a network element requested by the vertical federated client discovery request message. For example, VFL capability type = master VFL client, indicating that the master vertical federated client is requested.

Implementation 2: If a name of the vertical federated client discovery request message may indicate that the message is a request message for requesting the master vertical federated client, the vertical federated client discovery request message may not carry information about a network element capability type (namely, the master vertical federated client) supported by a requested network element. For example, the first slave vertical federated client sends a request message to the VFLSF by using an Nvflsf_VFLMasterClientDiscovery_Request service operation, and the VFLSF may learn, by using the service operation, that the first slave vertical federated client needs to request (discover) the master vertical federated client. For ease of understanding, this embodiment of this application is mainly described by using the first solution as an example.

Optionally, in addition to the foregoing described information, the vertical federated client discovery request message may further include information such as an identifier of a vertical federated learning group, a time period in which the vertical federated client is expected to support the vertical federated learning, data sample information expected to be supported by the vertical federated client, an overlap degree of sample space expected to be supported, data feature information expected to be supported by the vertical federated client, or a training mode expected to be supported by the vertical federated client. This is not limited in this application.

S704: The VFLSF sends a vertical federated client discovery response message to the first slave vertical federated client. Correspondingly, the first slave vertical federated client receives the vertical federated client discovery response message from the VFLSF.

In some feasible implementations, when the vertical federated client discovery request message includes the specific model type information, the VFLSF may determine (or referred to as discover), based on the received vertical federated client discovery request message, one or more master vertical federated clients supporting the specific model type information, and send, to the first slave vertical federated client, information about the one or more master vertical federated clients that are discovered by the VFLSF and that support the specific model type information. Herein, the information about the one or more determined master vertical federated clients that support the specific model type information may be carried in the vertical federated client discovery response message. Usually, the information about the master vertical federated client may be an identifier (identifier, ID) of the master vertical federated client, or the information about the master vertical federated client may be an internet protocol (internet protocol, IP) address of the master vertical federated client. When the fed-back information about the master vertical federated client is an ID of the master vertical federated client, the first slave vertical federated client may generate, based on the ID of the master vertical federated client, an IP address corresponding to the master vertical federated client.

For example, it is assumed that the specific model type information is a telecom package personalized recommendation model. If the vertical federated client discovery request message includes the specific model type information, that is, the telecom package personalized recommendation model, the vertical federated client discovery response message fed back by the VFLSF may include information about master vertical federated clients 1, 2, and 3 that support the telecom package personalized recommendation model.

In some other feasible implementations, when the vertical federated client discovery request message does not include the specific model type information, in addition to a master vertical federated client supporting the specific model type information, the vertical federated client discovery response message fed back by the VFLSF may further include information about a master vertical federated client supporting other model type information. Therefore, the first slave vertical federated client further needs to interact with a plurality of master vertical federated clients included in the vertical federated client discovery response message, to determine a specific master vertical federated client/specific master vertical federated clients that supports/support the specific model type information.

For example, it is assumed that the specific model type information is a telecom package personalized recommendation model. If the vertical federated client discovery request message does not include the specific model type information, the vertical federated client discovery response message fed back by the VFLSF may include information about master vertical federated clients 1, 2, and 3 that support the telecom package personalized recommendation model and information about master vertical federated clients 4, 5, and 6 that support a service experience analytics model. Therefore, the first slave vertical federated client further needs to separately interact with the master vertical federated clients 1, 2, and 3 that support the telecom package personalized recommendation model, and with the master vertical federated clients 4, 5, and 6 that support the service experience analytics model, to determine a specific master vertical federated client/specific master vertical federated clients that supports/support the telecom package personalized recommendation model.

For ease of understanding, an example in which the vertical federated client discovery request message includes the specific model type information, and the vertical federated client discovery response message includes the information about the one or more master vertical federated clients that support the specific model type information is used below for description.

S705: The first slave vertical federated client sends a vertical federated client selection request message to the first master vertical federated client. Correspondingly, the first master vertical federated client receives the vertical federated client selection request message from the first slave vertical federated client.

It should be understood that the first slave vertical federated client may select one master vertical federated client (for example, the first master vertical federated client is used as an example for description) from the one or more master vertical federated clients that support the specific model type information and that are fed back by the VFLSF, and send the vertical federated client selection request message to an IP address corresponding to the selected first master vertical federated client.

In some feasible implementations, the vertical federated client selection request message may include the specific model type information. Therefore, the vertical federated client selection request message is for requesting a slave vertical federated client that supports the specific model type information. In some other feasible implementations, when one master vertical federated client supports only one type of model type information, the vertical federated client selection request message may not include the specific model type information. Therefore, the vertical federated client selection request message is for requesting (discovering) a slave vertical federated client. It should be understood that, when the vertical federated client selection request message does not include the specific model type information, subsequently, the first master vertical federated client further needs to interact with each slave vertical federated client fed back by the VFLSF, to determine a specific slave vertical federated client/specific slave vertical federated clients that supports/support the specific model type information. This is similar to the operation performed when the vertical federated client discovery request message in S703 and S704 does not include the specific model type information. Details are not described herein again. For ease of understanding, an example in which the vertical federated client selection request message may include the specific model type information is mainly used for illustration below.

It should be understood that there may be the following two implementations in which the vertical federated client selection request message indicates a network element that is requested (discovered).

Implementation 1: Information (that is, fourth indication information) about a network element capability type (that is, a slave vertical federated client) of a requested network element may be carried in the vertical federated client selection request message, to indicate a type of network element that the vertical federated client selection request message is for requesting (discovering). For example, the vertical federated client selection request message includes a field (for example, the field may be described as VFL client selection Flag), and the field is for carrying a network element capability type of a network element requested by the vertical federated client selection request message. For example, VFL client selection Flag = slave VFL client, indicating that a slave vertical federated client is requested. For another example, slave VFL client selection Flag = 1, indicating that a slave vertical federated client is requested.

Implementation 2: If a name of the vertical federated client selection request message may indicate that the message is a request message for requesting the slave vertical federated client, the vertical federated client selection request message may not carry information about a network element capability type of a requested network element. For example, the first slave vertical federated client sends a slave vertical federated client selection request message to the first master vertical federated client by using an Nvflserver_VFLSlaveClientSelection_Request service operation, and the first master vertical federated client may learn, by using the service operation, that the first slave vertical federated client needs to request (discover) another slave vertical federated client. For ease of understanding, this embodiment of this application is mainly described by using the first solution as an example.

Optionally, the vertical federated client selection request message may further indicate information about requesting a vertical federated server. For example, server selection Flag = 1, indicating that a vertical federated server is requested. This is not limited in this application.

Optionally, the vertical federated client selection request message in this application may further indicate a network element capability type of the first slave vertical federated client, that is, indicate a network element capability type of an initiator of the vertical federated client selection request message, or indicate a network element capability type of the vertical federated learning initiator. The following mainly describes two implementations in which the network element capability type of the vertical federated learning initiator is indicated.

Implementation 1: Information about the network element capability type of the first slave vertical federated client may be carried in the vertical federated client selection request message, to indicate that the vertical federated learning initiator is a slave vertical federated client. For example, the vertical federated client selection request message includes a field (for example, the field may be described as VFL client indicator), and the field is for carrying information about the vertical federated learning initiator. For example, VFL client indicator = slave VFL client, indicating that the vertical federated learning initiator is a slave vertical federated client. For another example, the field may alternatively be a slave VFL client indicator. When slave VFL client indicator = 1, it indicates that the vertical federated learning initiator is a slave vertical federated client.

Implementation 2: If the name of the vertical federated client selection request message may indicate the vertical federated learning initiator, the vertical federated client selection request message may not carry the information about the vertical federated learning initiator. For example, the first slave vertical federated client sends a vertical federated client selection request message to the first master vertical federated client by using an Nvflserver_VFLClientSelection_Request service operation, and as defined, a requester of the Nvflserver_VFLClientSelection_Request service operation can only be a slave vertical federated client. In this case, the first master vertical federated client may learn, by using the service operation, that the vertical federated learning initiator is a slave vertical federated client. For ease of understanding, this embodiment of this application is mainly described by using the first solution as an example.

It should be noted that, there is usually only one master vertical federated client (that is, the first master vertical federated client in this application) that finally participates in the vertical federated learning. Therefore, for the first master vertical federated client in step S705, the vertical federated client selection request message received by the first master vertical federated client is usually initiated by the slave vertical federated client. Therefore, even if the vertical federated client selection request message does not include the VFL client indicator (or the slave VFL client indicator), the first master vertical federated client may also learn that an initiator of the vertical federated learning is the slave vertical federated client. In other words, the vertical federated client selection request message in the embodiment corresponding to FIG. 7A and FIG. 7B may carry the VFL client indicator (or the slave VFL client indicator), or may not carry the VFL client indicator (or the slave VFL client indicator).

Optionally, in addition to the foregoing described information, the vertical federated client selection request message may further include information such as the identifier of the vertical federated learning group, or a requirement/selection information for the requested slave vertical federated client. For example, the requirement for the requested slave vertical federated client includes one or more of the following: a time period in which a slave vertical federated client is expected to support the vertical federated learning, data sample information expected to be supported by the slave vertical federated client, data feature information expected to be supported by the slave vertical federated client, a training mode expected to be supported by the slave vertical federated client, or an overlap degree of sample space.

S706: The first master vertical federated client sends a vertical federated server discovery request message to the VFLSF. Correspondingly, the VFLSF receives the vertical federated server discovery request message from the first master vertical federated client.

S707: The VFLSF sends a vertical federated server discovery response message to the first master vertical federated client. Correspondingly, the first master vertical federated client receives the vertical federated server discovery response message from the VFLSF.

Herein, for descriptions of step S501 to step S504, refer to the descriptions of step S401 to step S404 in FIG. 4. Details are not described herein again.

S708: The first master vertical federated client sends a vertical federated client discovery request message to the VFLSF. Correspondingly, the VFLSF receives the vertical federated client discovery request message from the first master vertical federated client.

S709: The VFLSF sends a vertical federated client discovery response message to the first master vertical federated client. Correspondingly, the first master vertical federated client receives the vertical federated client discovery response message from the VFLSF.

S7010: The first master vertical federated client sends a vertical federated learning preparation request message to the at least one slave vertical federated client. Correspondingly, the at least one slave vertical federated client receives the vertical federated learning preparation request message from the first master vertical federated client.

S7011: The at least one slave vertical federated client determines whether to agree to join the vertical federated learning.

S7012: The at least one slave vertical federated client sends a vertical federated learning preparation response message to the first master vertical federated client. Correspondingly, the first master vertical federated client receives the vertical federated learning preparation response message from the at least one slave vertical federated client.

S7013: The first master vertical federated client determines a slave vertical federated client that finally participates in the vertical federated learning.

Herein, for understanding of step S706 to step S7013, refer to the related descriptions of specifying a master/slave client in step S503 to step S5010 in FIG. 5. Details are not described herein again.

S7014: The first master vertical federated client sends a vertical federated client selection response message to the first slave vertical federated client. Correspondingly, the first slave vertical federated client receives the vertical federated client selection response message from the first master vertical federated client.

Usually, the vertical federated client selection response message indicates whether a slave vertical federated client is successfully selected. Optionally, the vertical federated client selection response message may further indicate whether a vertical federated server is successfully selected. S7015: The first master vertical federated client sends a vertical federated learning model training request message to the first vertical federated server. Correspondingly, the first vertical federated server receives the vertical federated learning model training request message from the first master vertical federated client.

Herein, the model training request message includes information about the slave vertical federated client that finally participates in the vertical federated learning.

It should be noted that the embodiment corresponding to FIG. 7A and FIG. 7B mainly describes a vertical federated learning process in which the first slave vertical federated client initiates the vertical federated learning and the first master vertical federated client is responsible for coordination (that is, responsible for discovering and selecting a vertical federated server and another slave vertical federated client) in the case of specifying a master/slave client.

If a first network element is the first master vertical federated client, a first request message that is sent by the first master vertical federated client to a network repository function network element and that is for requesting a vertical federated server is equivalent to the vertical federated server discovery request message in step S706 in FIG. 7A, and a first response message fed back by the network repository function network element to the first master vertical federated client is equivalent to the vertical federated server discovery response message in step S707 in FIG. 7A.

If a first network element is the first master vertical federated client, a first request message that is sent by the first master vertical federated client to a network repository function network element and that is for requesting a slave vertical federated client is equivalent to the vertical federated client discovery request message in step S708 in FIG. 7A, and a first response message fed back by the network repository function network element to the first master vertical federated client is equivalent to the vertical federated client discovery response message in step S709 in FIG. 7A.

A fourth request message sent by the first master vertical federated client to the at least one slave vertical federated client is equivalent to the vertical federated learning preparation request message in step S7010 in FIG. 7B, and a fourth response message fed back by the at least one slave vertical federated client to the first master vertical federated client is equivalent to the vertical federated learning preparation response message in step S7012 in FIG. 7B.

A fifth request message sent by the first master vertical federated client to the first vertical federated server is equivalent to the vertical federated learning model training request message in step S7015 in FIG. 7B.

A sixth request message sent by the first slave vertical federated client to the first master vertical federated client is equivalent to the vertical federated client selection request message in step S705 in FIG. 7A, and a sixth response message sent by the first master vertical federated client to the first slave vertical federated client is equivalent to the vertical federated client selection response message in step S7014 in FIG. 7B.

In this embodiment of this application, the vertical federated client and the vertical federated server register vertical federated learning capability information with the VFLSF, so that when initiating the vertical federated learning, the first slave vertical federated client can discover, via the VFLSF, a first master vertical federated client that satisfies a requirement, and the first master vertical federated client discovers the first vertical federated server and another slave vertical federated client. This embodiment provides such a method for registering and discovering a vertical federated learning participant, so that an initiator can discover a proper participant that can participate in a vertical federated learning service, thereby laying a foundation for subsequent vertical federated learning model training.

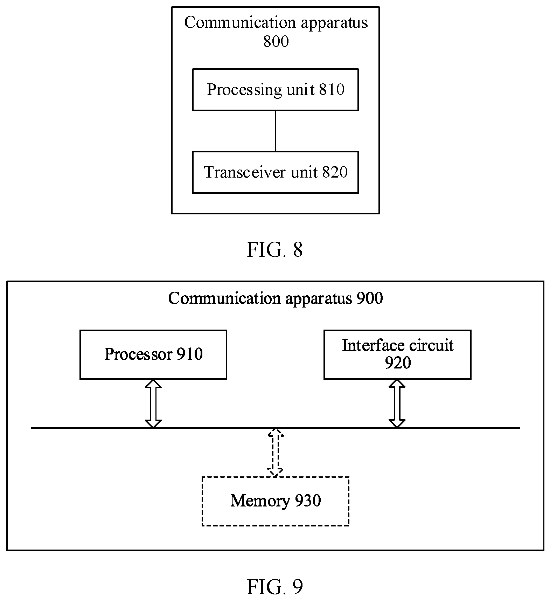

Communication apparatuses provided in this application are described below in detail with reference to FIG. 8 and FIG. 9.

It can be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 and FIG. 9 are diagrams of structures of possible communication apparatuses according to embodiments of this application. These communication apparatuses may be configured to implement functions of the network repository function network element, the first vertical federated client, or the first vertical federated server in the foregoing method embodiments, and therefore can also implement beneficial effects of the foregoing method embodiments. Alternatively, these communication apparatuses may be configured to implement functions of the network repository function network element, the first master vertical federated client, the first slave vertical federated client, or the first vertical federated server in the foregoing method embodiments, and therefore can also implement beneficial effects of the foregoing method embodiments. In embodiments of this application, the communication apparatuses may alternatively be modules (for example, chips) used in communication apparatuses.

As shown in FIG. 8, a communication apparatus 800 includes a processing unit 810 and a transceiver unit 820. The communication apparatus 800 is configured to implement functions of the network elements in the method embodiments shown in FIG. 4 to FIG. 7B.

When the communication apparatus 800 is configured to implement the network repository function network element in the method embodiments shown in FIG. 4 to FIG. 7B.

The transceiver unit 820 is configured to receive a first request message from a first network element, where the first request message is for requesting a second network element, and the first request message includes a network element capability type supported by the second network element, and further includes one or more of the following information: an identifier of a vertical federated learning group to which the second network element belongs and model type information supported by the second network element, where the network element capability type supported by the second network element is one of a vertical federated server or a vertical federated client, or the network element capability type supported by the second network element is one of a vertical federated server, a master vertical federated client, or a slave vertical federated client, and the model type information is for identifying a service type applicable to a model supported by the second network element and/or an algorithm type corresponding to the model.

The transceiver unit 820 is configured to send a first response message to the first network element, where the first response message includes one or more second network elements, and the one or more second network elements support the network element capability type.

For example, the processing unit 810 is configured to process received information.

When the communication apparatus 800 is configured to implement the functions of the first vertical federated client in the method embodiments shown in FIG. 4 to FIG. 7B.

The transceiver unit 820 is configured to send a second request message to a fourth network element, where the second request message includes model type information, and the second request message is for requesting a vertical federated client that supports the model type information.

The transceiver unit 820 is configured to receive a second response message from the fourth network element, where the second response message includes one or more vertical federated clients that support the model type information.

The fourth network element is a first vertical federated server or a network repository function network element.

For example, the processing unit 810 is configured to process received information.

When the communication apparatus 800 is configured to implement the functions of the first vertical federated server in the method embodiments shown in FIG. 4 to FIG. 7B.

The transceiver unit 820 is configured to send a first request message to a network repository function network element, where the first request message includes model type information, and the first request message is for requesting a vertical federated client that supports the model type information.

The transceiver unit 820 is configured to receive a first response message from the network repository function network element, where the first response message includes at least one vertical federated client that supports the model type information.

For more detailed descriptions of the processing unit 810 and the transceiver unit 820, refer to the related descriptions in the method embodiments shown in FIG. 4 to FIG. 7B.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the methods shown in FIG. 4 to FIG. 7B, the processor 910 is configured to implement functions of the processing unit 810, and the interface circuit 920 is configured to implement functions of the transceiver unit 820.

When the communication apparatus is a chip used in a network repository function network element, the network repository function network element chip implements the functions of the network repository function network element in the foregoing method embodiments. The chip of the network repository function network element receives, by using another module (for example, a radio frequency module or an antenna) in the network repository function network element, information sent by a first vertical federated client or a first vertical federated server to the network repository function network element; or the chip of the network repository function network element sends information to another module (for example, a radio frequency module or an antenna) in the network repository function network element, where the information is sent by the network repository function network element to a first vertical federated client or a first vertical federated server.

When the communication apparatus is a module used in a first vertical federated client, the chip in the first vertical federated client implements the functions of the first vertical federated client in the foregoing method embodiments. The module of the first vertical federated client receives information from another module (for example, a radio frequency module or an antenna) in the first vertical federated client, where the information is sent by a network repository function network element or a first vertical federated server to the first vertical federated client; or the module of the first vertical federated client sends information to another module (for example, a radio frequency module or an antenna) in the first vertical federated client, where the information is sent by the first vertical federated client to a network repository function network element or a first vertical federated server.

When the communication apparatus is a module used in a first vertical federated server, the chip in the first vertical federated server implements the functions of the first vertical federated server in the foregoing method embodiments. The module of the first vertical federated server receives information from another module (for example, a radio frequency module or an antenna) in the first vertical federated server, where the information is sent by a network repository function or a first vertical federated client to the first vertical federated server; or the module of the first vertical federated server sends information to another module (for example, a radio frequency module or an antenna) in the first vertical federated server, where the information is sent by the first vertical federated server to a network repository function or a first vertical federated client.

This application further provides a communication apparatus. The communication apparatus includes a processor. When the communication apparatus is a network repository function network element, the processor is configured to implement actions performed by the network repository function network element in the methods shown in FIG. 4 to FIG. 7B. When the communication apparatus is a first vertical federated client, the processor is configured to implement actions performed by the first vertical federated client in the methods shown in FIG. 4 to FIG. 7B. When the communication apparatus is a first vertical federated server, the processor is configured to implement actions performed by the first vertical federated server in the methods shown in FIG. 4 to FIG. 7B.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network repository function network element, a first vertical federated client, or a first vertical federated server. Alternatively, the processor and the storage medium may exist in a network repository function network element, a first vertical federated client, or a first vertical federated server as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a network repository function network element, and comprising:
receiving a first request message from a first network element, wherein the first request message is for requesting a second network element, and the first request message comprises a network element capability type supported by the second network element, and further comprises one or more of the following information: an identifier of a vertical federated learning group to which the second network element belongs and model type information supported by the second network element, wherein the network element capability type supported by the second network element is a vertical federated server and/or a vertical federated client, or the network element capability type supported by the second network element is one of a vertical federated server, a master vertical federated client, or a slave vertical federated client, and the model type information is for identifying a service type applicable to a model supported by the second network element and/or an algorithm type corresponding to the model; and
sending a first response message to the first network element, wherein the first response message comprises one or more second network elements, and the one or more second network elements support the network element capability type.

2. The method according to claim 1, wherein the first request message further comprises selection information of the second network element, wherein
when the network element capability type supported by the second network element is a vertical federated client, a master vertical federated client, or a slave vertical federated client, the selection information of the second network element comprises one or more of the following: a time period in which the second network element supports vertical federated learning, data sample information supported by the second network element, data feature information supported by the second network element, or a training mode supported by the second network element; or
when the network element capability type supported by the second network element is a vertical federated server, the selection information of the second network element comprises one or more of the following: a time period in which the second network element supports vertical federated learning, or a training mode supported by the second network element.

3. The method according to claim 1 or 2, wherein
when the first network element is a first vertical federated server, the network element capability type supported by the second network element is a vertical federated client, the network element capability type supported by the second network element is a slave vertical federated client, or the network element capability type supported by the second network element is a master vertical federated client;
when the first network element is a first master vertical federated client, the network element capability type supported by the second network element is a slave vertical federated client;
when the first network element is a first slave vertical federated client, the network element capability type supported by the second network element is a master vertical federated client; or
when the first network element is a first vertical federated client, a first master vertical federated client, or a first slave vertical federated client, the network element capability type supported by the second network element is a vertical federated server.

4. The method according to any one of claims 1 to 3, wherein the method further comprises:
receiving a registration request message from a third network element, wherein the registration request message comprises a network element capability type supported by the third network element, and further comprises one or more of the following information: an identifier of a vertical federated learning group to which the third network element belongs, and model type information supported by the third network element; and
sending a registration response message to the third network element, wherein the registration response message indicates a registration result of the third network element.

5. The method according to claim 4, wherein when the network element capability type supported by the third network element is a master vertical federated client or a slave vertical federated client, the registration request message comprises the model type information supported by the third network element.

6. The method according to claim 4 or 5, wherein
when the network element capability type supported by the third network element is a vertical federated client, a master vertical federated client, or a slave vertical federated client, the registration request message further comprises one or more of the following information: a time period in which the third network element supports vertical federated learning, data sample information supported by the third network element, data feature information supported by the third network element, or a training mode supported by the third network element; or
when the network element capability type supported by the third network element is a vertical federated server, the registration request message further comprises one or more of the following information: a time period in which the third network element supports vertical federated learning, or a training mode supported by the third network element.

7. The method according to any one of claims 4 to 6, wherein the third network element comprises the first network element.

8. A communication method, applied to a first vertical federated client supporting vertical federated learning, and comprising:
sending a second request message to a fourth network element, wherein the second request message comprises model type information, and the second request message is for requesting a vertical federated client that supports the model type information; and
receiving a second response message from the fourth network element, wherein the second response message comprises one or more vertical federated clients that support the model type information, wherein
the fourth network element is a first vertical federated server or a network repository function network element.

9. The method according to claim 8, wherein before the sending the second request message to the fourth network element, the method further comprises:
sending a third request message to the network repository function network element, wherein the third request message comprises the model type information, and the third request message is for requesting a vertical federated server that supports the model type information; and
receiving a third response message from the network repository function network element, wherein the third response message comprises one or more vertical federated servers.

10. The method according to claim 8 or 9, wherein when the fourth network element is a first vertical federated server, the second request message further indicates that a network element capability type supported by the first vertical federated client is a master vertical federated client or a slave vertical federated client.

11. The method according to claim 10, wherein the second request message comprises first indication information, and the first indication information indicates that the network element capability type supported by the first vertical federated client is a master vertical federated client or a slave vertical federated client.

12. The method according to claim 8 or 9, wherein when the fourth network element is a network repository function network element, the method further comprises:
sending a fourth request message to the one or more vertical federated clients, wherein the fourth request message is for requesting a vertical federated client to join the vertical federated learning; and
receiving a fourth response message from the one or more vertical federated clients, wherein the fourth response message indicates whether a vertical federated client agrees to join the vertical federated learning.

13. The method according to claim 12, wherein the method further comprises:
sending a fifth request message to a first vertical federated server, wherein the fifth request message comprises a vertical federated client that agrees to join the vertical federated learning.

14. The method according to claim 8 or 9, wherein that the second request message is for requesting the vertical federated client that supports the model type information comprises:
the second request message is for requesting a slave vertical federated client that supports the model type information;
the second request message is for requesting a master vertical federated client that supports the model type information; or
the second request message is for requesting a master vertical federated client and a slave vertical federated client that support the model type information.

15. The method according to claim 14, wherein the fourth network element is a network repository function network element, the first vertical federated client is a first master vertical federated client, the second request message is for requesting a master vertical federated client that supports the model type information, the second response message comprises one or more master vertical federated clients, and the first master vertical federated client is comprised in the one or more master vertical federated clients; and the method further comprises:
receiving a sixth request message from a first slave vertical federated client, wherein the sixth request message comprises the model type information, and the sixth request message is for requesting a slave vertical federated client that supports the model type information.

16. The method according to claim 15, wherein the method further comprises:
sending a sixth response message to the first slave vertical federated client, wherein the sixth response message indicates whether a slave vertical federated client is successfully requested.

17. The method according to claim 16, wherein the fourth network element is a network repository function network element, the first vertical federated client is a first slave vertical federated client, the second request message is for requesting a master vertical federated client that supports the model type information, the second response message comprises one or more master vertical federated clients, and a first master vertical federated client is comprised in the one or more master vertical federated clients; and
the method further comprises:
sending a sixth request message to the first master vertical federated client, wherein the sixth request message comprises the model type information, and the sixth request message is for requesting a slave vertical federated client that supports the model type information.

18. The method according to claim 17, wherein the method further comprises:
receiving a sixth response message sent by the first master vertical federated client, wherein the sixth response message indicates whether a slave vertical federated client is successfully requested.

19. The method according to any one of claims 8 to 18, wherein the second request message further comprises one or more of the following information: second indication information, an identifier of a vertical federated learning group, or selection information for the requested vertical federated client, wherein
the second indication information indicates that the requested network element capability type is a vertical federated client, and the selection information for the requested vertical federated client comprises one or more of the following: a time period in which the vertical federated learning is supported, supported data sample information, supported data feature information, or a supported training mode.

20. The method according to claim 9, wherein the third request message further comprises one or more of the following information: an identifier of a vertical federated learning group, or a network element capability type requested by the third request message.

21. The method according to claim 12 or 13, wherein the fourth request message comprises one or more of the following information:
third indication information, a time requirement for the vertical federated learning, a data sample requirement for the vertical federated learning, a data feature requirement for the vertical federated learning, or information about a master vertical federated client, wherein
the third indication information indicates a vertical federated client to join the vertical federated learning.

22. The method according to any one of claims 15 to 18, wherein the sixth request message further comprises one or more of the following information:
fourth indication information, a network element capability type of the first slave vertical federated client initiating the sixth request message, or selection information for the requested slave vertical federated client, wherein
the fourth indication information is for requesting the slave vertical federated client.

23. The method according to any one of claims 8 to 11, wherein the first vertical federated client is a first master vertical federated client, and the second request message is for requesting a slave vertical federated client that supports the model type information; and the method further comprises:
receiving a seventh request message from the first vertical federated server, wherein the seventh request message comprises one or more slave vertical federated clients that support the model type information.

24. The method according to any one of claims 8 to 23, wherein the method further comprises:
sending a registration request message to the network repository function network element, wherein the registration request message comprises the network element capability type supported by the first vertical federated client, and further comprises one or more of the following information: an identifier of a vertical federated learning group to which the first vertical federated client belongs, and model type information supported by the first vertical federated client; and
receiving a registration response message from the network repository function network element, wherein the registration response message indicates a registration result of the first vertical federated client.

25. The method according to claim 24, wherein when the network element capability type supported by the first vertical federated client is a master vertical federated client or a slave vertical federated client, the registration request message comprises the model type information supported by the first vertical federated client.

26. The method according to claim 24 or 25, wherein the registration request message further comprises one or more of the following information: a time period in which the first vertical federated client supports the vertical federated learning, data sample information supported by the first vertical federated client, data feature information supported by the first vertical federated client, or a training mode supported by the first vertical federated client.

27. A communication method, applied to a first vertical federated server supporting vertical federated learning, and comprising:
sending a first request message to a network repository function network element, wherein the first request message comprises model type information, and the first request message is for requesting a vertical federated client that supports the model type information; and
receiving a first response message from the network repository function network element, wherein the first response message comprises at least one vertical federated client that supports the model type information.

28. The method according to claim 27, wherein the method further comprises:
receiving a second request message from a first vertical federated client, wherein the second request message comprises the model type information, and the second request message is for requesting the vertical federated client that supports the model type information; and
sending the first request message to the network repository function network element comprises:
sending the first request message to the network repository function network element based on the second request message.

29. The method according to claim 28, wherein the method further comprises:
sending a second response message to the first vertical federated client, wherein the second response message comprises one or more vertical federated clients that support the model type information.

30. The method according to claim 29, wherein the method further comprises:
sending a fourth request message to the at least one vertical federated client, wherein the fourth request message is for requesting a vertical federated client to join the vertical federated learning; and
receiving a fourth response message from the at least one vertical federated client, wherein the fourth response message indicates whether a vertical federated client agrees to join the vertical federated learning; and
the sending the second response message to the first vertical federated client comprises:
sending the second response message to the first vertical federated client based on the fourth response message.

31. The method according to any one of claims 28 to 30, wherein the first vertical federated client is a first master vertical federated client, and the second request message is for requesting a slave vertical federated client that supports the model type information; and the method further comprises:
sending a seventh request message to the first master vertical federated client, wherein the seventh request message comprises one or more slave vertical federated clients that support the model type information.

32. The method according to any one of claims 28 to 31, wherein the second request message further indicates that a network element capability type of the first vertical federated client is a master vertical federated client or a slave vertical federated client.

33. The method according to claim 25, wherein the second request message comprises first indication information, and the first indication information indicates that a network element capability type of the first vertical federated client is a master vertical federated client or a slave vertical federated client.

34. The method according to any one of claims 25 to 29, or 33, wherein the second request message further comprises one or more of the following information: second indication information, an identifier of a vertical federated learning group, or selection information for the requested vertical federated client, wherein
the second indication information indicates that the requested network element capability type is a vertical federated client, and the selection information for the requested vertical federated client comprises one or more of the following: a time period in which the vertical federated learning is supported, supported data sample information, supported data feature information, or a supported training mode.

35. The method according to claim 34, wherein when the network element capability type of the first vertical federated client is a master vertical federated client, the second indication information comprised in the second request message indicates that the requested network element capability type is a slave vertical federated client, and fifth indication information comprised in the first request message indicates that the requested network element capability type is a slave vertical federated client.

36. The method according to claim 35, wherein the first request message further comprises one or more of the following information: the identifier of the vertical federated learning group, or selection information for the requested slave vertical federated client.

37. The method according to claim 34, wherein when the network element capability type of the first vertical federated client is a slave vertical federated client, the second indication information comprised in the second request message indicates that the requested network element capability type is a master vertical federated client and a slave vertical federated client, and fifth indication information comprised in the first request message indicates that the requested network element capability type is a master vertical federated client and a slave vertical federated client.

38. The method according to claim 37, wherein the first request message further comprises one or more of the following information: the identifier of the vertical federated learning group, selection information for the requested master vertical federated client, or selection information for the requested slave vertical federated client.

39. The method according to any one of claims 27 to 38, wherein the method further comprises:
sending a registration request message to the network repository function network element, wherein the registration request message comprises a network element capability type supported by the first vertical federated server, and further comprises one or more of the following information: an identifier of a vertical federated learning group to which the first vertical federated server belongs, and model type information supported by the first vertical federated server; and
receiving a registration response message from the network repository function network element, wherein the registration response message indicates a registration result of the first vertical federated server.

40. The method according to claim 39, wherein the registration request message further comprises one or more of the following information: a time period in which the first vertical federated server supports the vertical federated learning, or a training mode supported by the first vertical federated server.

41. The method according to any one of claims 1 to 40, wherein the model type information is an analytics identifier.

42. A communication apparatus, comprising a unit or a module configured to perform the method according to any one of claims 1 to 7 or 41, comprising a unit or a module configured to perform the method according to any one of claims 8 to 26 or 41, or comprising a unit or a module configured to perform the method according to any one of claims 27 to 41.

43. A communication apparatus, comprising a processor, wherein the processor is configured to implement the method according to any one of claims 1 to 7 or 41, implement the method according to any one of claims 8 to 26 or 41, or implement the method according to any one of claims 27 to 41.

44. A computer-readable storage medium, wherein the storage medium stores a computer program or instructions; and when the computer program or the instructions are executed by a communication apparatus, the method according to any one of claims 1 to 7 or 41 is implemented, the method according to any one of claims 8 to 26 or 41 is implemented, or the method according to any one of claims 27 to 41 is implemented.

45. A computer program product, comprising computer program code, wherein when the computer program code is run on a computer, the method according to any one of claims 1 to 7 or 41 is implemented, the method according to any one of claims 8 to 26 or 41 is implemented, or the method according to any one of claims 27 to 41 is implemented.

46. A communication system, comprising a network repository function network element configured to implement the method according to any one of claims 1 to 7 or 41, a first vertical federated client configured to implement the method according to any one of claims 8 to 26 or 41, and a first vertical federated server configured to implement the method according to any one of claims 27 to 41.
